(19) Europäisches Patentamt
European Patent Office
Office européen des brevets

(11) EP 2 620 666 B1

(12) **EUROPEAN PATENT SPECIFICATION**

(45) Date of publication and mention of the grant of the patent:
**30.08.2017 Bulletin 2017/35**

(21) Application number: **10857514.3**

(22) Date of filing: **21.09.2010**

(51) Int Cl.:
***F16D 48/02*** *(2006.01)* ***F16D 48/06*** *(2006.01)*

(86) International application number:
**PCT/JP2010/066310**

(87) International publication number:
**WO 2012/039019 (29.03.2012 Gazette 2012/13)**

(54) **VEHICLE CONTROL SYSTEM**

FAHRZEUGSTEUERUNGSSYSTEM

SYSTÈME DE COMMANDE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**31.07.2013 Bulletin 2013/31**

(73) Proprietor: **TOYOTA JIDOSHA KABUSHIKI KAISHA**
**Toyota-shi, Aichi-ken, 471-8571 (JP)**

(72) Inventors:
- **MATSUNAGA, Hitoshi**
**Toyota-shi**
**Aichi 471-8571 (JP)**
- **OKUMURA, Kazuya**
**Toyota-shi**
**Aichi 471-8571 (JP)**

(74) Representative: **D Young & Co LLP**
**120 Holborn**
**London EC1N 2DY (GB)**

(56) References cited:

| | |
|---|---|
| **EP-A2- 0 845 616** | **DE-A1-102008 009 135** |
| **JP-A- 2000 257 656** | **JP-A- 2005 132 147** |
| **JP-A- 2006 046 541** | **JP-A- 2007 232 069** |
| **JP-A- 2008 075 839** | **JP-A- 2009 012 532** |
| **JP-A- 2009 208 700** | **US-A- 4 715 482** |
| **US-A1- 2004 186 645** | **US-B1- 6 314 342** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field

The present invention relates to a vehicle control system.

### Background

Patent Literature 1 discloses, as a conventional vehicle control system, for example, a control device of a vehicle drive device that includes a differential mechanism for distributing an output of an engine to a first electric motor and to a transmission member and an engaging device which places an engine rotation speed in a state in which the engine rotation speed is not restricted by a rotation speed of the transmission member by being disposed to the differential mechanism and placed in a released state in order to control an engine rotation reduction speed by placing the engaging device in the released state and using the first electric motor when the engine is stopped. In the case, the control device of the vehicle drive device reduces the engine rotation speed using the first electric motor so that the engine rotation speed promptly becomes lower than an engine rotation speed region in which a vibration of a vehicle is made equal to or more than a predetermined value by resonance of a power transmission system. See also as closest prior art, DE102008009135.

### Citation List

### Patent Literature

Patent Literature 1: Japanese Patent Application Laid-open No. 2006-046541

### Summary

### Technical Problem

Incidentally, the control device of the vehicle drive device described in Patent Literature 1 has a further room for improvement for suppressing, for example, a vibration.

An object of the present invention, which was made in view of the circumstances, is to provide a vehicle control system capable of appropriately suppressing a vibration generated to a vehicle.

### Solution to Problem

In order to achieve the above mentioned object, a vehicle control system according to the present invention includes an internal combustion engine capable of switching an operating state in which a power applied to a drive wheel of a vehicle is generated and a non-operating state in which the generation of the power is stopped, while the vehicle travels; an engaging device capable of switching a state in which a rotating member on the internal combustion engine side and a rotating member on the drive wheel side are engaged with each other so as to be able to transmit a power and a state in which the engagement is released, and capable of adjusting an engaging force for engaging the rotating member on the internal combustion engine side with the rotating member on the drive wheel side; and a control device configured to execute engaging force reducing control for reducing the engaging force of the engaging device, when an engine rotation speed of the internal combustion engine is a resonance rotation speed, in comparison with a case that an engine rotation speed of the internal combustion engine is not the resonance rotation speed.

Further, in the vehicle control system, it is possible to configure that the resonance rotation speed is set to a speed within a predetermined range.

Further, in the vehicle control system, it is possible to configure that, while the vehicle travels, when an engine rotation speed of the internal combustion engine is reduced and becomes the resonance rotation speed accompanied by the fact that an operation of the internal combustion engine is stopped, the control device executes the engaging force reducing control.

Further, in the vehicle control system, it is possible to configure that, in the engaging force reducing control, the control device places the rotating member on the internal combustion engine side and the rotating member on the drive wheel side in a slip state or in a released state.

Further, in the vehicle control system, it is possible to configure that the control device learns a magnitude of the engaging force in the engaging force reducing control based on a magnitude of vibration of the vehicle.

Further, in the vehicle control system, it is possible to configure that when an engine rotation speed of the internal combustion engine becomes a control start rotation speed according to the resonance rotation speed, the control device starts the engaging force reducing control and changes the control start rotation speed based on a changing speed of an engine rotation speed of the internal combustion engine.

Further, in the vehicle control system, it is possible to configure that when an engine rotation speed of the internal combustion engine becomes a control start rotation speed according to the resonance rotation speed, the control device starts the engaging force reducing control and changes the control start rotation speed based on delay characteristics until the engaging force becomes a target magnitude after the engaging force reducing control is started.

Further, in the vehicle control system, it is possible to configure that when the control device determines that the vehicle is in an abrupt brake state, the control device starts the engaging force reducing control.

Further, in the vehicle control system, it is possible to configure that when a degree of abrupt brake of the vehicle is equal to or more than a preset threshold value, the control device prohibits the engaging force reducing control.

Further, in the vehicle control system, it is possible to configure that when an engine rotation speed of the internal combustion engine becomes a control start rotation speed according to the resonance rotation speed, the control device starts the engaging force reducing control and changes the control start rotation speed based on an intake air amount, an intake air temperature, or an intake air density of the internal combustion engine.

Further, in the vehicle control system, it is possible to configure that when an engine rotation speed of the internal combustion engine becomes a control start rotation speed according to the resonance rotation speed, the control device starts the engaging force reducing control and changes the control start rotation speed based on a magnitude of vibration of the internal combustion engine.

Advantageous Effects of Invention

The vehicle control system according to the present invention achieves an effect that a vibration generated to a vehicle can be appropriately suppressed.

Brief Description of Drawings

FIG. 1 is a schematic configuration view of a vehicle control system according to a first embodiment.
FIG. 2 is a time chart explaining an example of engaging force reducing control.
FIG. 3 is a time chart more specifically explaining the engaging force reducing control.
FIG. 4 is a flowchart explaining an example of the engaging force reducing control.
FIG. 5 is a schematic configuration view of a vehicle control system according to a second embodiment.
FIG. 6 is a flowchart explaining an example of engaging force learning control.
FIG. 7 is a time chart explaining an example of control start rotation number setting control of a vehicle control system according to a third embodiment.
FIG. 8 is a flowchart explaining an example of the control start rotation number setting control.
FIG. 9 is a time chart explaining an example of control start rotation number setting control of a vehicle control system according to a fourth embodiment.
FIG. 10 is a time chart explaining an example of delay period learning control.
FIG. 11 is a flowchart explaining an example of the control start rotation number setting control.
FIG. 12 is a flowchart explaining an example of abrupt-braking-time engaging force reducing control of a vehicle control system according to a fifth embodiment.
FIG. 13 is a flowchart explaining an example of control start rotation number setting control of a vehicle control system according to a sixth embodiment.
FIG. 14 is a flowchart explaining an example of control start rotation number setting control of a vehicle control system according to a seventh embodiment. Description of Embodiments

Embodiments of a vehicle control system according to the present invention will be explained in detail based on drawings. Note that the present invention is by no means restricted by the embodiments. Further, the components in the embodiments include components that can be replaced by a person skilled in the art and easy or substantially same components.

[First Embodiment]

FIG. 1 is a schematic configuration view of a vehicle control system according to a first embodiment, FIG. 2 is a time chart explaining an example of engaging force reducing control, FIG. 3 is a time chart more specifically explaining the engaging force reducing control, and FIG. 4 is a flowchart explaining an example of the engaging force reducing control.

As illustrated in FIG. 1, a vehicle control system 1 of the embodiment includes an engine 4 as an internal combustion engine that is applied to a vehicle 2 and generates a power for driving a drive wheel 3, a power transmission device 5 constituting a power transmission system for transmitting the power generated by the engine 4 to the drive wheel 3, a brake device 6 as a brake device of the vehicle 2, a state detecting device 7 for detecting a state of the vehicle 2, and an ECU 8 as a control device for controlling the respective sections of the vehicle 2 including the vehicle control system 1.

The engine 4 is a travelling drive source (prime mover) for causing the vehicle 2 to travel. As a fuel is combusted, the engine 4 generates a power applied to the drive wheel 3 of the vehicle 2. While the vehicle 2 travels, the engine 4 can switch an operating state and a non-operating state. The operating state of the engine 4 (state in which the engine 4 is operated) is a state in which the power applied to the drive wheel 3 of the vehicle 2 is generated and is a state in which heat energy generated by combusting the fuel in a combustion chamber is output in a form of mechanical energy such as torque. In contrast, the non-operating state of the engine 4, that is, a state in which an operation of the engine 4 is stopped is a state in which a generation of power is stopped and is a state in which a supply of the fuel to the combustion chamber is stopped (fuel cut), the fuel is not combusted in the combustion chamber, and mechanical energy such as torque is not output.

The power transmission device 5 is configured including a transmission 11, which is composed including a torque converter 9 that is a fluid transmission device with a lock-up clutch and an input clutch 10 as an engaging device, a differential gear 12 coupled with the transmission 11, a drive shaft 13 for coupling the differential gear 12 with the drive wheel 3, and the like.

The input clutch 10 can employ various clutches and can switch an engaged state, in which a rotating member 10a on the engine 4 side is engaged with a rotating member 10b on the drive wheel 3 side so that a power can be transmitted therebetween, and a released state in which the engagement is released. When the input clutch 10 is placed in the released state, the input clutch 10 can cut off a power transmission between the engine 4 and the drive wheel 3 by disengaging the engine 4 from the drive wheel 3. The rotating member 10a on the engine 4 side corresponds to an output shaft of the torque converter 9, and the rotating member 10b on the drive wheel 3 side corresponds to an input shaft of a main body (transmission mechanism which actually performs a gear change) of the transmission 11. That is, in the power transmission device 5, the output shaft of the torque converter 9 is connected to the input shaft of the main body of the transmission 11 via the input clutch 10.

Further, the input clutch 10 can adjust an engaging force for engaging the rotating member 10a on the engine 4 side with the rotating member 10b on the drive wheel 3 side. When the engaging force is 0, the input clutch 10 is placed in the released state in which the engagement thereof is released, and as the engaging force increases, the input clutch 10 is placed in a perfectly engaged state via a semi-engaged state (slip state). Note that the transmission 11 can employ variously configured transmissions, for example, a manual transmission (MT), a multi-stage automatic transmission (AT), a continuously variable automatic transmission (CVT), a multi-mode manual transmission (MMT), a sequential manual transmission (SMT), a dual clutch transmission (DCT), and the like.

The power generated by the engine 4 is input to the input clutch 10 of the transmission 11 via the torque converter 9, gear-changed by the transmission 11 at a predetermined gear change ratio, and transmitted to the drive wheel 3 via the differential gear 12 and the drive shaft 13. As a result, in the vehicle 2, a drive force [N] is generated to a ground contact surface of the drive wheel 3 to a road surface, thereby the vehicle 2 can travel.

The brake device 6 applies a brake force to the wheels including the drive wheel 3. As a result, in the vehicle 2, a brake force [N] is generated to the ground plane of the drive wheel 3 to the road surface, thereby the vehicle 2 can be braked.

The state detecting device 7 is electrically connected to the ECU 8 and can mutually transmit and receive information such as a detection signal, a drive signal, and a control command. The state detecting device 7 includes various sensors, detectors, and the like disposed to the respective sections of the vehicle 2, for example, an engine speed sensor 71 for detecting an engine speed, an accelerator opening degree sensor 72 for detecting an accelerator opening degree that is an operation amount of an accelerator pedal (accelerator operation amount) by a driver, a brake sensor 73 for detecting an operation amount of a brake pedal by the driver, for example, a master cylinder pressure and the like and detecting a brake force, an input shaft rotation number sensor 74 for detecting an input shaft rotation number of the transmission 11, an output shaft rotation number sensor 75 for detecting an output shaft rotation number of the transmission 11, an oil temperature sensor 76 for detecting an oil temperature of a hydraulic oil used in a TM hydraulic pressure control device 14, a brake hydraulic pressure control device 15, and the like, and an intake air sensor 77 for detecting information as to an intake air flowing in an intake air path 17 to be described later such as an intake air amount, an intake air temperature, an intake air density, and the like.

The ECU 8 is an electronic circuit mainly composed of a known microcomputer including a CPU, ROM, RAM, and an interface. The ECU 8 controls the power transmission device 5, which includes the engine 4, the transmission 11, and the like, the brake device 6, and the like. The power transmission device 5, which includes the transmission 11 and the like, and the brake device 6 are hydraulic devices operated by a pressure (hydraulic pressure) of the hydraulic oil as a medium, and the ECU 8 controls the operations of the transmission 11 and the brake device 6 via the TM hydraulic pressure control device 14, the brake hydraulic pressure control device 15, and the like, respectively and, for example, controls a gear change operation of the transmission 11, an engagement/release operation of the input clutch 10, and the like. The ECU 8 is input with electric signals corresponding to results of detection detected from the various sensors, outputs drive signals to the respective sections in response to the results of detection, and controls the drives of the respective sections.

In, for example, an ordinary drive, the ECU 8 controls a throttle device 16 of the engine 4 based on an accelerator opening degree, a vehicle speed, and the like, adjusts a throttle opening degree of the intake air path 17, adjusts an the intake air amount, controls a fuel injection amount corresponding to a change of the intake air amount, and controls an output of the engine 4 by adjusting an amount of an air fuel mixture filled in the combustion chamber. Further, the ECU 8 controls the TM hydraulic pressure control device 14 based on the accelerator opening degree, the vehicle speed, and the like and controls an operating state of the input clutch 10 and a gear change ratio of the transmission 11.

The ECU 8 can switch the operating state and the non-operating state of the engine 4 by starting the engine 4 or stopping an operation of the engine 4 while the vehicle 2 travels. Typically, in the vehicle control system 1, when a predetermined condition is established, that is when, for example, the vehicle 2 is decelerated by a coast travel by turning off an accelerator and when the engine speed is equal to or more than a predetermined rotation number while the vehicle 2 travels, the ECU 8 executes fuel cut control for stopping the supply of the fuel to the combustion chamber of the engine 4 and can shift to control for stopping an operation of the engine 4 and causing the vehicle 2 to perform an inertia-travel (coast-down), that is, placing the vehicle 2 in a so-called eco-run state, and thereby a fuel consumption can be improved. The ECU 8 can cause the vehicle 2 to return to an ordinary travel in which the vehicle 2 travels by the power generated by the engine 4 by starting the engine 4 again under the predetermined condition, for example, when the accelerator is turned on, and the like.

Incidentally, in the vehicle control system 1 of the embodiment, when the engine speed of the engine 4 (engine rotation speed) is a resonance rotation number (resonance rotation speed), a vibration generated to the vehicle 2 is appropriately suppressed by suppressing a vibration due to engine resonance from being transmitted to the drive shaft 13 and the like when, for example, the engine 4 is stopped while the vehicle 2 travels in such a manner that the ECU 8 executes the engaging force reducing control for reducing the engaging force of the input clutch 10, in comparison with a case that the engine speed is not the resonance rotation number.

The resonance rotation number is an engine speed when resonance of a power transmission system, by which a vibration of the vehicle 2 exceeds a predetermined value, is generated and previously determined by an experiment and the like. The resonance rotation number is set to a rotation number within a predetermined range and constitutes a resonance rotation number zone having a predetermined width.

It is known that, when, for example, the engine speed is within a predetermined resonance rotation number zone, a resonance phenomenon occurs to the engine 4 by overlapping of a torque variation caused by compression, instable expansion, and the like and resonance of an engine power plant. That is, in the vehicle 2, there is a possibility that a vibration is generated by that the vibration of the power transmission system (drive system) which is generated by a variation of engine torque caused by a rotating motion of the engine 4 that is a vibration source is increased by the resonance phenomenon of the power transmission system and transmitted to a vehicle body via an engine mount and the like. The resonance phenomenon is generated in the resonance rotation number zone as a resonance region as described above. Ordinarily, an idling rotation number, a fuel supply return engine speed, and the like are set so as not to use the resonance rotation number zone, in other words, the resonance rotation number zone is set to an engine speed region which is not basically used in an ordinary travel in which the engine 4 is operated and set to, for example, a relatively low specific engine speed region which is less than the idling rotation number.

In the vehicle control system 1 of the embodiment, however, when the engine stop condition is established as described above, the ECU 8 executes the fuel cut control while the vehicle 2 travels, and the operation of the engine 4 is stopped, since the engine speed is reduced thereby, the engine speed may enter the resonance rotation number zone in a process in which the engine speed is reduced. As a result, in the vehicle 2, there is a possibility that a vibration is generated to the vehicle body by that the vibration caused by the engine resonance generated by the resonance phenomenon is transmitted to the drive shaft 13 and the like, and thereby there is a possibility, for example, that drivability and the like is deteriorated.

Thus, in the ECU 8 of the embodiment, when the engine speed is within the resonance rotation number zone, an engagement transmission by which resonance may be generated is cut by the input clutch 10 by executing the engaging force reducing control. Typically, the ECU 8 executes the engaging force reducing control when the engine speed is reduced by stopping the operation of the engine 4 while the vehicle 2 travels and the engine speed becomes the resonance rotation number.

Specifically, in the engaging force reducing control, the ECU 8 controls the TM hydraulic pressure control device 14 and adjusts a hydraulic pressure of the hydraulic oil supplied to the input clutch 10 to thereby reduce the engaging force. Typically, in the ordinary travel state in which the fuel cut control is not executed, the engaging force of the input clutch 10 is set to a magnitude by which the input clutch 10 is placed in the perfectly engaged state, whereas in a state in which the fuel cut control is executed and the engine speed is out of the resonance rotation number zone, the engaging force of the input clutch 10 is set to a magnitude by which the input clutch 10 is placed in the perfectly engaged state or to a magnitude a little smaller than the above magnitude. In a state in which the engine speed is within the resonance rotation number zone, the engaging force of the input clutch 10 is set to a magnitude smaller than the magnitude when the engine speed is out of the resonance rotation number zone.

In the engaging force reducing control, when the engine speed is the resonance rotation number, it is sufficient for the ECU 8 to reduce the engaging force of the input clutch 10 as compared with a case that the engine speed is not the resonance rotation number, and a vibration can be reduced as described later even if, for example, the engaging force is set to 0 and the input clutch 10 is placed in a perfectly released state. However, here, the engaging force is set larger than at least 0 and the rotating member 10a on the engine 4 side and the rotating member 10b on the drive wheel 3 side are placed in a slip state. That is, in the ECU 8 of the embodiment, when the engine speed is the resonance rotation number, the engaging force is made smaller than when the engine speed is not the resonance rotation number and the engaging force is adjusted so that the rotating member 10a and the rotating member 10b are placed in the semi-engaged state in which the rotating member 10a and the rotating member 10b slip. That is, in the engaging force reducing control, the ECU 8 keeps the engaging force as high as possible in a level in which the input clutch 10 does not transmit a vibration while relatively reducing the engaging force in comparison with the case that the engine speed is not the resonance rotation number. In the case, it is sufficient to previously set the magnitude of the engaging force in the engaging force reducing control based on a magnitude of an allowable vibration, a specification of the vehicle 2, an actual vehicle evaluation, and the like and to store the magnitude of the engaging force in a storage unit of the ECU 8.

FIG. 2 uses a horizontal axis as a time axis, and a vertical axis as a fuel injection flag, an eco-run execution flag, an accelerator opening degree, an engine speed, and a clutch hydraulic pressure. Further, FIG. 3 is a time chart in which a period from a time t12 to a time t13 in FIG. 2 is enlarged, and uses a horizontal axis as a time axis and a vertical axis as a vehicle G applied to the vehicle 2, an engine speed, and a clutch hydraulic pressure. The clutch hydraulic pressure is a hydraulic pressure for engaging the rotating member 10a with the rotating member 10b in the input clutch 10, and the engaging force for engaging the rotating member 10a with the rotating member 10b in the input clutch 10 is set to a magnitude according to the clutch hydraulic pressure.

As illustrated in FIG. 2, when, for example, it is detected by the accelerator opening degree sensor 72 at a time t11 that the accelerator is turned off, that is, the accelerator opening degree becomes smaller than a predetermined opening degree, the ECU 8 turns ON the eco-run execution flag, turns OFF the fuel injection flag, and executes the fuel cut control for stopping the supply of the fuel to the combustion chamber of the engine 4. Note that, at the time, the ECU 8 controls the TM hydraulic pressure control device 14, reduces the clutch hydraulic pressure to a first hydraulic pressure P1 which is relatively lower as compared with when the eco-run execution flag is turned OFF and the fuel injection flag is turned ON to thereby make the engaging force of the input clutch 10 relatively small.

Thereafter, the operation of the engine 4 is stopped to thereby reduce the engine speed. When the engine speed detected by the engine speed sensor 71 becomes equal to or less than an upper limit rotation number neh of the resonance rotation number zone at the time t12, the ECU 8 controls the TM hydraulic pressure control device 14 and reduces the clutch hydraulic pressure to a second hydraulic pressure P2 that is further lower than the first hydraulic pressure P1 to thereby further reduce the engaging force of the input clutch 10. The control corresponds to the engaging force reducing control.

When the engine speed is further reduced and the engine speed detected by the engine speed sensor 71 at the time t13 becomes equal to or less than a lower limit rotation number nel of the resonance rotation number zone, the ECU 8 controls the TM hydraulic pressure control device 14, recovers the clutch hydraulic pressure from the second hydraulic pressure P2 to the first hydraulic pressure P1, and recovers the engaging force of the input clutch 10.

As a result, in the vehicle control system 1, as illustrated in FIG. 3, since the ECU 8 executes the engaging force reducing control in the engine resonance zone in the period from the time t12 to the time t13 in which the engine speed is within the resonance rotation number zone, when an actual engine speed passes through the resonance rotation number zone, a vibration due to resonance can be suppressed from being transmitted to the drive shaft 13 and the like, and thereby the vibration generated to the vehicle 2 can be suppressed. When, for example, a state in which the vehicle 2 is decelerated is assumed, the vehicle 2 travels while being decelerated by negative input torque of the engine 4, that is, by engine brake torque. In the vehicle control system 1, when the engaging force of the input clutch 10 is made relatively small by executing the engaging force reducing control as described above, since a power equal to or more than a torque capacity according to the engaging force that is made relatively small in the input clutch 10 is not transmitted, it becomes hard to transmit a vibration to the drive shaft 13 and the like as illustrated in a dotted line portion of the vehicle G in FIG. 3. As described above, in the vehicle control system 1, when the engine speed is within the resonance rotation number zone, for example, a vibration transmission level can be reduced to a level which can be allowed by an attenuation system and the like of the vehicle 2 by executing the engaging force reducing control by the ECU 8.

At the time, the vehicle control system 1 can improve responsiveness at the time of restart as compared with, for example, the case that the input clutch 10 is placed in the perfectly released state by that the ECU 8 keeps the engaging force as high as possible in the engaging force reducing control in a level in which no vibration is transmitted by the input clutch 10 while relatively reducing the engaging force as compared with the case that the engine speed is not the resonance rotation number. That is, in the engaging force reducing control, since the vehicle control system 1 keeps the input clutch 10 in the semi-engaged state without placing the input clutch 10 in the perfectly released state, the vehicle control system 1 can relatively reduce a time necessary to place the input clutch 10 in the perfectly engaged state again when the engine 4 is restarted, and thereby an occurrence of an engagement delay of the input clutch 10 can be suppressed. As a result, since the vehicle control system 1 can suppress a start of power transmission from being delayed in the input clutch 10 when the engine 4 is restarted, the vehicle 2 can be accelerated with good responsiveness in response to, for example, an acceleration request operation (accelerator depressing operation) of the driver. With the operation, the vehicle control system 1 can improve the responsiveness while suppressing the vibration of the vehicle 2 when the engine 4 is restarted, that is, the vibration of the vehicle 2 can be suppressed and the responsiveness can be improved when the engine 4 is restarted at the same time.

Further, since the vehicle control system 1 keeps the engaging force as high as possible in the level in which no vibration is transmitted by the input clutch 10 in the engaging force reducing control, the vehicle control system 1 can suppress an engagement shock at the time of reengagement of the input clutch 10 without making the hydraulic pressure control at the time of the reengagement complex as compared with, for example, the case that the input clutch 10 is placed in the perfectly released state.

Further, in the engaging force reducing control, since the vehicle control system 1 keeps the input clutch 10 in the semi-engaged state without placing the input clutch 10 in the perfectly released state, the vehicle control system 1 can prevent the engine brake from being not applied when the vehicle 2 travels while being decelerated, that is, the vehicle control system 1 can apply the engine brake when the vehicle 2 travels while being decelerated.

Further, in the vehicle control system 1, when the fuel cut control is executed and control for placing the vehicle 2 in the eco-run state is started, even if a configuration for placing the input clutch 10 in the perfectly released state is employed, an abrupt cut off of a power transmission may be suppressed by a pressure reduction executed by a sweep of a control hydraulic pressure (clutch hydraulic pressure) to prevent the power transmission from being abruptly cut-off when the input clutch 10 is released. At the time, when the engine speed enters the resonance rotation number zone while the input clutch 10 is being released, although there is a possibility that a vibration is transmitted to the drive shaft 13 and the like, even in the case, the vehicle control system 1 can appropriately suppress the vibration by executing the engaging force reducing control by the ECU 8 as described above.

Next, an example of the engaging force reducing control executed by the ECU 8 will be explained referring to the flowchart of FIG. 4. Note that these control routines are repeatedly executed in a control cycle of every several milliseconds to several tens of milliseconds (this is the same also in the following explanation).

First, the ECU 8 determines whether or not the vehicle 2 travels in the eco-run by executing the fuel cut control and stopping the operation of the engine 4 based on various information from the state detecting device 7, an operating state of the engine 4, and the like (ST1).

When the ECU 8 determines that the vehicle 2 is in the eco-run (ST1: Yes), the ECU 8 obtains the engine speed detected by the engine speed sensor 71 and determines whether or not an engine speed ne at the time is larger than the lower limit rotation number nel of the resonance rotation number zone and is equal to or less than the upper limit rotation number neh of the resonance rotation number zone, that is, whether or not [$nel < ne \leq neh$] is satisfied (ST2).

When the ECU 8 determines that the engine speed ne at the time is larger than the lower limit rotation number nel of the resonance rotation number zone and equal to or less than the upper limit rotation number neh of the resonance rotation number zone (ST2: Yes), the ECU 8 determines whether or not a clutch hydraulic pressure pcl at the time is larger than a preset reducing-control-time hydraulic pressure pcldrn in the engaging force reducing control (ST3). Here, the preset reducing-control-time hydraulic pressure pcldrn corresponds to the second hydraulic pressure P2 explained in FIG. 2 and FIG. 3.

When the ECU 8 determines that the clutch hydraulic pressure pcl at the time is larger than the reducing-control-time hydraulic pressure pcldrn (ST3: Yes), the ECU 8 sets the clutch hydraulic pressure pcl to the reducing-control-time hydraulic pressure pcldrn by controlling the TM hydraulic pressure control device 14, reduces the engaging force of the input clutch 10 (ST4), finishes a control cycle at the time, and goes to a next control cycle.

When the ECU 8 determines that the vehicle 2 is not in the eco-run at ST1, (ST1: No), the ECU 8 finishes the control cycle at the time and goes to the next control cycle. When the ECU 8 determines that the engine speed ne at the time is equal to or less than the lower limit rotation number nel of the resonance rotation number zone at ST2 or determines that the engine speed ne at the time is larger than the upper limit rotation number neh of the resonance rotation number zone (ST2: No), the ECU 8 sets the clutch hydraulic pressure pcl to a preset eco-run-time hydraulic pressure pclcnti at the time of eco-run by controlling the TM hydraulic pressure control device 14 (ST5), finishes the control cycle at the time, and goes to the next control cycle. Here, the preset eco-run-time hydraulic pressure pclcnti corresponds to the first hydraulic pressure P1 explained in FIG. 2 and FIG. 3. When the ECU 8 determines that the clutch hydraulic pressure pcl at the time is equal to or less than the reducing-control-time hydraulic pressure pcldrn at ST3 (ST3: No), the ECU 8 finishes the control cycle at the time and goes to the next control cycle.

According to the vehicle control system 1 according to the embodiment explained above, the vehicle control system 1 is provided with the engine 4 capable of switching the operating state, in which the power applied to the drive wheel 3 of the vehicle 2 is generated while the vehicle 2 travels, and the non-operating state in which the generation of the power is stopped, the input clutch 10 capable of switching the state in which the rotating member 10a on the engine 4 side is engaged with the rotating member 10b on the drive wheel 3 so that a power can be transmitted therebetween and the state in which the engagement is released and capable of adjusting the engaging force for engaging the rotating member 10a on the engine 4 side with the rotating member 10b on the drive wheel 3 side, and the control device for executing the engaging force reducing control for reducing the engaging force of the input clutch 10 when the engine speed of the engine 4 is the resonance rotation number as compared with the case that the engine speed is not the resonance rotation number. Accordingly, the vehicle control system 1 can appropriately suppress a vibration generated to the vehicle 2.

[Second Embodiment]

FIG. 5 is a schematic configuration view of a vehicle control system according to a second embodiment, and FIG. 6 is a flowchart explaining an example of engaging force learning control. The vehicle control system according to the second embodiment is different from the first embodiment in that the vehicle control system according to the second embodiment executes the engaging force learning control. In addition to the above-mentioned, a duplicate explanation as to a configuration, an operation, and an effect common to those of the embodiment described above will not be repeated as much as possible and the same components are denoted by the same reference numerals (this is also the same in embodiments explained below).

A vehicle control system 201 of the embodiment illustrated in FIG. 5 includes an ECU 208 as a control device. The ECU 208 executes the engaging force learning control for learning a magnitude of an engaging force in engaging force reducing control based on a magnitude of a vibration of the vehicle 2. In the engaging force learning control, the ECU 208 detects a magnitude of a vibration of a power transmission device 5 while the engaging force reducing control is executed and corrects a magnitude of the engaging force in the engaging force reducing control executed next according to a detected vibration level.

Next, an example of the engaging force learning control executed by the ECU 208 will be explained referring to the flowchart of FIG. 6.

First, the ECU 208 detects a magnitude of a vibration of the vehicle 2 while the engaging force reducing control is executed (ST201). The vehicle control system 201 includes, for example, a vibration sensor 278 (refer to FIG. 5) for detecting a magnitude of a vibration, and the ECU 208 detects a magnitude of a vibration of the vehicle 2 according to a result of detection of the vibration sensor 278.

Note that the vehicle control system 201 may estimate and detect a magnitude of a vibration of the vehicle 2 according to a result of detection of other sensor ordinarily provided with the vehicle 2 in addition to that an increase of a manufacturing cost is prevented by employing a configuration in which the vibration sensor 278 is not provided. For example, the ECU 208 may estimate and detect a magnitude of a vibration of the vehicle 2 based on an input shaft rotation number and an output shaft rotation number of a transmission 11 detected by an input shaft rotation number sensor 74 and an output shaft rotation number sensor 75, respectively and on a gear change ratio (gear ratio) of the transmission 11 at the time. In the case, the ECU 208 can calculate an input shaft equivalent rotation number based on the output shaft rotation number and the gear change ratio of the transmission 11 at the time and estimate a magnitude of a vibration of the vehicle 2 according to a deviation between the input shaft equivalent rotation number and an actual input shaft rotation number at the time.

Ordinarily, an input shaft of the transmission 11 is fluid coupled with a crank shaft of an engine 4 by a fluid coupling of a torque converter 9 and the like or directly coupled with the crank shaft by a lock up clutch and the like. When an input clutch 10 of the transmission 11 is in an engaged state, the input shaft equivalent rotation number, which is a rotation number obtained by multiplying the output shaft rotation number of the transmission 11 by the gear change ratio at the time, must agree with the actual input shaft rotation number. On the contrary, when the engaging force reducing control is executed and a rotating member 10a and a rotating member 10b are placed is a slip state, a difference is generated between the input shaft equivalent rotation number and the actual input shaft rotation number. Accordingly, the ECU 208 can estimate and detect a vibration transmission level according to a deviation between the input shaft equivalent rotation number and the actual input shaft rotation number.

Further, the ECU 208 can also estimate and detect a magnitude of a vibration of the vehicle 2 based on, for example, a variation of rotation of an output shaft rotation number of the transmission 11 detected by the output shaft rotation number sensor 75. Ordinarily, a vibration due to engine resonance is transmitted to the transmission 11 and appears as a variation of rotation of an output shaft of the transmission 11. Accordingly, when a correspondence relation between a variation of rotation level (the variation of rotation amount) of the output shaft of the transmission 11 and a vehicle vibration level (vibration amount) is previously made to a map based on an actual vehicle evaluation and the like and stored in a storage unit, the ECU 208 can estimate and detect the vibration transmission level according to the variation of rotation level of the output shaft rotation number at the time based on the map.

After the ECU 208 detects the magnitude of the vibration of the vehicle 2 at ST201, the ECU 208 learns the magnitude of the engaging force in the engaging force reducing control executed next based on the magnitude of the vibration (ST202), finishes a control cycle at the time, and goes to a next control cycle. When, for example, a vibration level at a resonance point is larger than a preset predetermined level, the ECU 208 relatively reduces a magnitude of the engaging force in the engaging force reducing control executed next by a preset predetermined amount. Note that the ECU 208 may appropriately change the predetermined amount (learning level) in the engaging force learning control according to, for example, a relation between the detected vibration level and a magnitude of the engaging force in the engaging force learning control at the time, and the like.

According to the vehicle control system 201 according to embodiment explained above, a vibration generated to the vehicle 2 can be appropriately suppressed. Since the ECU 208 learns the magnitude of the engaging force in the engaging force reducing control based on the magnitude of the vibration of the vehicle 2, the vehicle control system 201 of the embodiment can suppress that the engaging force in the engaging force reducing control becomes smaller than necessary and can increase the engaging force as large as possible in a range in which the vibration of the vehicle 2 can be suppressed. As a result, the vehicle control system 201 can further improve responsiveness when the engine 4 is restarted in addition to that the vibration of the vehicle 2 is securely suppressed. Since the vehicle control system 201 executes the engaging force learning control without initially setting the magnitude of the engaging force in the engaging force reducing control on a side relatively smaller than necessary taking a safety factor into consideration in view of, for example, a variation, a time degradation, and the like of respective parts, the vehicle control system 201 can adjust the magnitude of the engaging force in the engaging force reducing control to an optimum magnitude and further, even if the variation, the time degradation, and the like of the respective parts occur, the vehicle control system 201 can adjust the magnitude of the engaging force to the optimum magnitude according to the variation, the time degradation, and the like of the respective parts.

[Third Embodiment]

FIG. 7 is a time chart explaining an example of control start rotation number setting control of a vehicle control system according to a third embodiment, and FIG. 8 is a flowchart explaining an example of the control start rotation number setting control. The vehicle control system according to the third embodiment is different from the first and second embodiments in that the vehicle control system according to the third embodiment executes the control start rotation number setting control based on an engine rotation speed. Note that as to a main configuration, FIG. 1 will be referred to.

A vehicle control system 301 of the embodiment explained in FIG. 7 and FIG. 8 includes an ECU 308 as a control device (refer to FIG. 1). When an engine speed of an engine 4 becomes a control start rotation number (control start rotation speed) according to a resonance rotation number, the ECU 308 starts engaging force reducing control. The control start rotation number is configured including a control start rotation number Thneh on an upper limit side according to an upper limit rotation number neh of a resonance rotation number zone and a control start rotation number Thnel on a lower limit side according to a lower limit rotation number nel of the resonance rotation number zone. When an engine speed ne at the time detected by an engine speed sensor 71 becomes the control start rotation number Thnel or the control start rotation number Thneh, the ECU 308 starts the engaging force reducing control. The ECU 308 executes the control start rotation number setting control for changing the control start rotation number based on a changing speed, typically, a reducing speed of the engine speed. Note that, in the first embodiment described above, for example, the upper limit rotation number neh itself of the resonance rotation number zone corresponds to the control start rotation number Thneh described here.

FIG. 7 uses a horizontal axis as a time axis and a vertical axis as an engine speed, a clutch hydraulic pressure, and an engaging force of an input clutch 10. In the vehicle control system 301 as described above, when an engaging force of the input clutch 10 is reduced to a predetermined magnitude, a predetermined period T1 is required according to release characteristics and the like of the input clutch 10 from a time t31 at which a TM hydraulic pressure control device 14 is controlled and a clutch hydraulic pressure is reduced to a time t32 at which the engaging force actually becomes a predetermined magnitude as exemplified in FIG. 7. Accordingly, to cause the engaging force to become the requested predetermined magnitude at the time the engine speed becomes the upper limit rotation number neh or the lower limit rotation number nel of the resonance rotation number zone, the ECU 308 preferably executes the engaging force reducing control at an early timing taking the predetermined period T1 into consideration before the engine speed actually becomes the upper limit rotation number neh or the lower limit rotation number nel. However, since a degree of change of the engine speed is different depending on a driving condition and the like, even if the timing at which the engaging force reducing control is executed at the early timing is fixedly determined as a predetermined value, there is a possibility that an expected effect may not be obtained.

Thus, the ECU 308 of the embodiment calculates a changing speed of the engine speed detected by the engine speed sensor 71 and executes the control start rotation number setting control for changing the control start rotation numbers Thnel and Thneh according to the upper limit rotation number neh and the lower limit rotation number nel based on the changing speed of the engine speed. With the operation, the ECU 308 can appropriately execute the engaging force reducing control at the early timing before an actual engine speed becomes the upper limit rotation number neh or the lower limit rotation number nel.

When, for example, the engine speed changes as illustrated in a solid line L1 of FIG. 7, the ECU 308 starts the engaging force reducing control at the time the actual engine speed is reduced and becomes a control start rotation number Thneh1 in which a change (reduction) of a rotation number in the predetermined period T1 is taken into consideration. With the operation, when the engine speed enters an actual engine resonance zone (resonance rotation number zone), the ECU 308 can realize an engaging force required by the input clutch 10. Further, when, for example, the engine speed changes as illustrated by a dotted line L1' in which the changing speed is larger than that in the solid line L1, the ECU 308 starts the engaging force reducing control when the actual engine speed becomes a control start rotation number Thneh1' on a side of rotation higher than the control start rotation number Thneh1. With the operation, even when the changing speed of the engine speed varies, the ECU 308 can realize the engaging force required by the input clutch 10 at the time the engine speed enters the actual engine resonance zone (resonance rotation number zone). Note that the ECU 308 executes control start rotation number setting control approximately similar to that described above also as to the control start rotation number Thnel on the lower limit rotation number nel side of the resonance rotation number zone.

Next, an example of the control start rotation number setting control executed by the ECU 308 will be explained referring to the flowchart of FIG. 8.

First, the ECU 308 obtains the engine speed ne detected by the engine speed sensor 71 and calculates a changing speed (change amount per unit time) $\Delta$ne of the engine speed ne (ST301). The changing speed $\Delta$ne of the engine speed ne corresponds to a degree of reduction or a degree of increase of the engine speed ne.

Next, the ECU 308 sets the control start rotation numbers Thneh and Thnel based on the changing speed $\Delta$ne of the engine speed ne calculated at ST301 (ST302), finishes a control cycle at the time, and goes to a next control cycle. For example, the ECU 308 can calculate the control start rotation numbers Thneh and Thnel based on the changing speed $\Delta$ne, the predetermined period T1, and the upper limit rotation number neh and the lower limit rotation number nel of the resonance rotation number zone using the following expressions (1) and (2). The ECU 308 can set optimum control start rotation numbers Thneh and Thnel regardless of the changing speed of the engine speed by making the control start rotation numbers Thneh and Thnel variable according to the changing speed $\Delta$ne based on the expressions.

$$Thneh = neh + \Delta ne \times T1 \quad (1)$$

$$Thnel = nel - \Delta ne \times T1 \quad (2)$$

According to the vehicle control system 301 according to the embodiment explained above, a vibration generated to the vehicle 2 can be appropriately suppressed. Since the ECU 308 changes the control start rotation speed based on the changing speed of the engine speed, the vehicle control system 301 of the embodiment can securely cause the engaging force of the input clutch 10 to become the predetermined magnitude at the time the engine speed actually becomes the upper limit rotation number neh or the lower limit rotation number nel of the resonance rotation number zone, and thereby a vibration suppressing effect can be appropriately obtained by the engaging force reducing control in the engine resonance zone.

[Fourth Embodiment]

FIG. 9 is a time chart explaining an example of control start rotation number setting control of a vehicle control system according to a fourth embodiment, FIG. 10 is a time chart explaining an example of delay period learning control, and FIG. 11 is a flowchart explaining an example of control start rotation number setting control. The vehicle control system according to the fourth embodiment is different from the first to third embodiments in that the vehicle control system according to the fourth embodiment executes the control start rotation number setting control based on delay characteristics. Note that as to a main configuration, FIG. 1 will be referred to.

A vehicle control system 401 of the embodiment explained in FIG. 9 to FIG. 11 includes an ECU 408 as a control device (refer to FIG. 1). The ECU 408 executes the control start rotation number setting control for changing a control start rotation number based on the delay characteristics until an engaging force of an input clutch 10 actually becomes a target magnitude after an engaging force reducing control is started. The ECU 408 executes the engaging force reducing control at an early timing taking into consideration a delay period according to the delay characteristics until the engaging force of the input clutch 10 actually becomes the target magnitude after a command for starting the engaging force reducing control and reducing the engaging force is output to a TM hydraulic pressure control device 14. The ECU 408 makes the control start rotation number variable taking the delay period according to the delay characteristics into consideration and makes a timing, at which the command for reducing the engaging force is output to the TM hydraulic pressure control device 14, variable.

FIG. 9 uses a horizontal axis as a time axis and a vertical axis as an engine speed, a clutch hydraulic pressure, and an engaging force of the input clutch 10. When, for example, a configuration, which uses a hydraulic pressure control system in which the input clutch 10 is operated according to a hydraulic pressure of a hydraulic oil, is employed as in the vehicle control system 401 of the embodiment, since viscosity characteristics of the hydraulic oil changes according to an oil temperature and the like of the hydraulic oil, the delay period until the engaging force actually becomes the target magnitude after the command for reducing the engaging force is output is varied according to the viscosity characteristics of the hydraulic oil. For example, since a lower oil temperature more increases a viscosity of the hydraulic oil, there is a tendency that the delay period becomes relatively long. The ECU 408 sets a control start rotation number Thneh to a relatively high rotation side and sets a control start rotation number Thnel to a relatively low rotation side as, for example, the oil temperature of the hydraulic oil detected by an oil temperature sensor 76 becomes lower, i.e., as the viscosity of the hydraulic oil becomes larger according to hydraulic pressure delay characteristics of the hydraulic pressure control system of the input clutch 10 including the TM hydraulic pressure control device 14 and the like.

When, for example, the hydraulic oil is at a room temperature and the hydraulic pressure delay characteristics of the hydraulic pressure control system of the input clutch 10 is illustrated as characteristics of a solid line of FIG. 9, the ECU 408 outputs a command for starting the engaging force reducing control at a time t42 at which the engine speed becomes a control start rotation number Thneh2 and reducing the engaging force to the TM hydraulic pressure control device 14. With the operation, the ECU 408 can realize the engaging force required by the input clutch 10 at a time t43 at which the engine speed enters an actual engine resonance zone (resonance rotation number zone). In the case, a period T2 from the time t42 to the time t43 corresponds to a delay period according to the delay characteristics. Further, when, for example, the hydraulic oil is at a low temperature and the hydraulic pressure delay characteristics of the hydraulic pressure control system of the input clutch 10 is illustrated as characteristics of dotted lines of FIG. 9, the ECU 408 outputs the command for starting the engaging force reducing control and reducing the engaging force to the TM hydraulic pressure control device 14 at a time t41 at which the engine speed becomes a control start rotation number Thneh3 on a side of rotation higher than the control start rotation number Thneh2. With the operation, the ECU 408 can realize the engaging force required by the input clutch 10 at a time t43 at which the engine speed enters the actual engine resonance zone (resonance rotation number zone). In the case, a period T3 from the time t41 to the time t43 corresponds to the delay period according to the delay characteristics. As a result, the ECU 408 can realize the engaging force required by the input clutch 10 when the engine speed enters the actual engine resonance zone (resonance rotation number zone) regardless of a variation of the delay characteristics until the engaging force of the input clutch 10 actually becomes the target magnitude after the engaging force reducing control is started, for example, regardless of a variation of the hydraulic pressure delay characteristics of the hydraulic pressure control system due to a change of the oil temperature.

Note that, in the vehicle control system 401, a predetermined delay period itself may change due to a variation of a pressure adjustment of a hydraulic pressure in the TM hydraulic pressure control device 14 and a variation of μ characteristics or a time degradation of a friction material in the input clutch 10, and the like. In the vehicle control system 401, when, for example, the vibration sensor 278 for detecting the vibration explained in the second embodiment (refer to FIG. 5) and the like are combined and a predetermined vibration is detected only in an initial period tadj (in FIG. 10, a period from a time t51 to a time t52) in which the engine speed enters the resonance rotation number zone as in, for example, Pattern B illustrated in FIG. 10, it can be estimated that an actual delay period becomes longer than a previously estimated delay period by the period tadj. Accordingly, in the case, the ECU 408 does not execute the engaging force learning control of the second embodiment and learns a delay period used in next control as a period obtained by adding the period tadj to a delay period set at the time. Further, on the contrary, when no vibration is detected, the ECU 408 learns the delay period used in the next control as a period obtained by subtracting the period tdcc from the delay period set at the time. As a result, the ECU 408 can learn an optimum delay period. Note that this is the same as to the learning of the predetermined period T1 explained in the third embodiment. Further, Pattern A in FIG. 10 exemplifies a case that the engaging force reducing control is not executed in the engine resonance zone from the time t51 to a time t53.

Next, an example of the control start rotation number setting control executed by the ECU 408 will be explained referring to the flowchart of FIG. 11.

First, the ECU 408 detects the delay characteristics until the engaging force of the input clutch 10 actually becomes the target magnitude after the engaging force reducing control is started (ST401). The ECU 408 detects the delay characteristics based on, for example, the hydraulic pressure delay characteristics according to the oil temperature of the hydraulic oil detected by the oil temperature sensor 76, and the like.

Next, the ECU 408 sets the control start rotation numbers Thneh and Thnel based on the delay characteristics detected at ST401 (ST402), finishes a control cycle at the time, and goes to a next control cycle. The ECU 408 can set optimum control start rotation numbers Thneh and Thnel regardless of a variation of the delay characteristics by making the control start rotation numbers Thneh and Thnel variable according to the delay characteristics.

According to the vehicle control system 401 according to the embodiment described above, a vibration generated to the vehicle 2 can be appropriately suppressed. Since the vehicle control system 401 of the embodiment changes a control start rotation speed based on the delay characteristics until the engaging force of the input clutch 10 becomes the target magnitude after the ECU 408 starts the engaging force reducing control, the vehicle control system 401 can cause the engaging force of the input clutch 10 to securely become a predetermined magnitude at the time the engine speed actually becomes the upper limit rotation number neh or the lower limit rotation number nel of the resonance rotation number zone and can appropriately obtain a vibration suppression effect in the engine resonance zone by the engaging force reducing control.

[Fifth Embodiment]

FIG. 12 is a flowchart explaining an example of an abrupt-braking-time engaging force reducing control of a vehicle control system according to a fifth embodiment. The vehicle control system according to the fifth embodiment is different from the first to fourth embodiments in that the vehicle control system according to the fifth embodiment executes the abrupt-braking-time engaging force reducing control at the time of abrupt braking. Note that, as to a main configuration, FIG. 1 will be referred to.

A vehicle control system 501 of the embodiment explained in FIG. 12 includes an ECU 508 as a control device (refer to FIG. 1). When the ECU 508 determines that a vehicle 2 is in an abrupt brake state, the ECU 508 starts the engaging force reducing control. When the vehicle 2 is abruptly braked, the ECU 508 may not calculate a changing speed of an engine speed, and the like explained in, for example, the third embodiment and the like. Accordingly, here, when the ECU 508 determines that the vehicle 2 is in the abrupt brake state, the ECU 508 starts the engaging force reducing control at the time and outputs a command for reducing an engaging force to the TM hydraulic pressure control device 14. With the operation, the ECU 508 can securely realize an engaging force required by an input clutch 10 before the engine speed enters a resonance rotation number zone.

Here, when, for example, the ECU 508 determines that a brake force according to a master cylinder pressure detected by a brake sensor 73, and the like is larger than a preset predetermined value, the ECU 508 determines that the vehicle 2 is in the abrupt brake state. In addition to the above-mentioned, the ECU 508 may detect the abrupt brake of the vehicle 2 by detecting a variation of rotation of a wheel based on a result of detection of a sensor for detecting a wheel speed of the vehicle 2. Note that since the variation of rotation of the wheel is affected by a brake at a relatively earlier timing than the engine speed and a rotation number of a transmission 11, the ECU 508 can detect the abrupt brake of the vehicle 2 at an earlier stage by monitoring the variation of rotation of the wheel. Further, the ECU 508 may detect the abrupt brake of the vehicle 2 based on a result of detection by a G sensor for detecting an acceleration applied to the vehicle 2.

In contrast, when the vehicle 2 is abruptly braked, since a large brake force is applied to a drive shaft 13 and the like, a vibration of a vehicle due to a transmission of engine resonance may be ignored depending on a degree of braking. Here, when a degree of abrupt brake of the vehicle 2 is equal to or more than a preset threshold value, the ECU 508 prohibits the engaging force reducing control. It is preferable to preset the threshold value based on an allowable magnitude of vibration, a specification of a vehicle, an actual vehicle evaluation, and the like and to store the threshold value in a storage unit of the ECU 508. As a result, the vehicle control system 501 can suppress unnecessary engaging force reducing control.

Next, an example of the abrupt-braking-time engaging force reducing control executed by the ECU 508 will be explained referring to the flowchart of FIG. 12.

First, the ECU 508 determines whether or not the vehicle 2 is in the abrupt brake state according to a result of detection of the master cylinder pressure detected by the brake sensor 73, and the like (ST501).

When the ECU 508 determines that the vehicle 2 is in the abrupt brake state (ST501: Yes), the ECU 508 determines whether or not a degree of braking is equal to or more than a preset threshold value according to the result of detection of the master cylinder pressure detected by the brake sensor 73, and the like (ST502). When the ECU 508 determines that the vehicle 2 is not in the abrupt brake state at ST501 (ST501: No), the ECU 508 finishes a control cycle at the time and goes to a next control cycle.

When the ECU 508 determines that the degree of braking is equal to or more than the preset threshold value (ST502: Yes), the ECU 508 prohibits to execute the engaging force reducing control (ST503), finishes the control cycle at the time, and goes to the next control cycle. When the ECU 508 determines that the degree of braking is smaller than the preset threshold value (ST502: No), the ECU 508 starts the engaging force reducing control regardless of the engine speed at the time (ST504), finishes the control cycle at the time, and goes to the next control cycle.

According to the vehicle control system 501 according to the embodiment explained above, a vibration generated to the vehicle 2 can be appropriately suppressed. When the ECU 508 determines that the vehicle 2 is in the abrupt brake state, since the vehicle control system 501 of the embodiment starts the engaging force reducing control regardless of the engine speed at the time, the vehicle control system 501 of the embodiment can securely cause the engaging force of the input clutch 10 to become a predetermined magnitude at the time the engine speed actually becomes an upper limit rotation number neh or a lower limit rotation number nel of the resonance rotation number zone even when the vehicle 2 is abruptly braked and can appropriately obtain a vibration suppression effect by the engaging force reducing control in the engine resonance zone. Further, when the degree of abrupt braking of the vehicle 2 is equal to or more than the preset threshold value, since the ECU 508 prohibits the engaging force reducing control, the vehicle control system 501 can suppress the unnecessary engaging force reducing control.

[Sixth Embodiment]

FIG. 13 is a flowchart explaining an example of control start rotation number setting control of a vehicle control system according to a sixth embodiment. The vehicle control system according to the sixth embodiment is different from the first to fifth embodiments in that the vehicle control system according to the sixth embodiment executes the control start rotation number setting control based on an intake air state. Note that, as to a main configuration, FIG. 1 will be referred to.

A vehicle control system 601 of the embodiment explained in FIG. 13 includes an ECU 608 as a control device (refer to FIG. 1). The ECU 608 executes the control start rotation number setting control for changing a control start rotation number based on the intake air state such as an intake air amount, an intake air temperature, or an intake air density and the like of an engine 4.

In the engine 4, a balance of compression and expansion of an air fuel mixture in an combustion chamber may be varied by, for example, a variation of the intake air amount, which results in that a resonance rotation number zone itself may be varied. Here, the ECU 608 makes a control start rotation number variable according to the variation of the resonance rotation number zone. The ECU 608 previously causes the intake air amount and the resonance rotation number zone to correspond to each other by an actual vehicle evaluation and the like, makes a relation therebetween as a map, stores the map in a storage unit, and calculates the resonance rotation number zone according to the intake air amount at the time detected by an intake air sensor 77 based on the map. Then, the ECU 608 sets the control start rotation number based on the resonance rotation number zone according to the intake air amount. Note that the ECU 608 may estimate and calculate the intake air amount by, for example, a throttle opening degree of at the time in addition to estimate and calculate the intake air amount by the intake air sensor 77 such as an air flow meter and the like. Further, when the engine 4 includes a variable valve mechanism for making a lift amount of an intake air valve variable, the ECU 608 may estimate and calculate the intake air amount based on the lift amount and the like of the intake air valve.

Likewise, the ECU 608 previously causes the intake air temperature, the intake air density, and the resonance rotation number zone to correspond to each other based on the actual vehicle evaluation and the like, makes a map of a relation therebetween, stores the map in the storage unit, and calculates the resonance rotation number zone based on the map according to the intake air temperature and the intake air density at the time detected by the intake air sensor 77. Then, the ECU 608 sets the control start rotation number based on the resonance rotation number zone according to the intake air temperature and the intake air density.

Next, an example of the control start rotation number setting control executed by the ECU 608 will be explained referring to the flowchart of FIG. 13.

First, the ECU 608 detects the intake air state at the time such as the intake air amount, the intake air temperature, and the intake air density based on information as to intake air detected by the intake air sensor 77 (ST601).

Next, the ECU 608 calculates the resonance rotation number zone at the time based on the intake air state of the engine 4 detected at ST601, sets control start rotation numbers Thneh and Thnel according to the intake air state of the engine 4 (ST602), finishes a control cycle at the time, and goes to a next control cycle. The ECU 608 can set optimum control start rotation numbers Thneh and Thnel regardless of a variation of the intake air state by making the control start rotation numbers Thneh and Thnel variable according to the intake air state.

According to the vehicle control system 601 according to the embodiment explained above, a vibration generated to a vehicle 2 can be appropriately suppressed. Then, since the ECU 608 changes the control start rotation number based on the intake air amount, the intake air temperature, or the intake air density of the engine 4, the vehicle control system 601 of the embodiment can appropriately execute engaging force reducing control even if the resonance rotation number zone is varied according to the variation of the intake air state and can securely suppress a vibration of the vehicle 2.

[Seventh Embodiment]

FIG. 14 is a flowchart explaining an example of control start rotation number setting control of a vehicle control system according to a seventh embodiment. The vehicle control system according to the seventh embodiment is different from the first to sixth embodiments in that the vehicle control system according to the seventh embodiment executes the control start rotation number setting control based on a vibration. Note that, as to a main configuration, FIG. 5 will be referred to.

A vehicle control system 701 of the embodiment explained in FIG. 14 includes an ECU 708 as a control device (refer to FIG. 5). The ECU 708 executes the control start rotation number setting control for changing a control start rotation number based on a magnitude of a vibration of an engine 4.

In the vehicle control system 701, the engine 4 is disposed with, for example, a vibration sensor 278 (refer to FIG. 5), and the ECU 708 detects an actual resonance rotation number zone according to a vibration of the engine 4 actually detected by the vibration sensor 278, and sets and learns the control start rotation number according to the actual resonance rotation number zone.

There is a possibility that the actual resonance rotation number zone may be varied according to, for example, a variation of the engine 4 and a variation, a time degradation, and the like of an engine mount system. In contrast, the vehicle control system 701 of the embodiment detects an actual vibration generated to the engine 4, detects the actual resonance rotation number zone by the actual vibration, and changes the control start rotation according to the actual resonance rotation number zone. Note that the ECU 708 may detect a level (magnitude) of variation of an engine rotation based on, for example, a result of detection of an engine speed sensor 71, and the like and may detect the vibration of the engine 4 according to the level of variation of the engine rotation in place of the vibration sensor 278. When, for example, the engine speed is within a resonance rotation number zone, a variation of an engine speed and a vibration of a vehicle 2 become relatively large by that the engine 4 resonates as compared with a case that the engine speed is out of the resonance rotation number zone. Accordingly, the ECU 708 can detect a rotation number region in which, for example, the engine speed is rotated and varied to a level equal to or more than a preset predetermined level as the actual resonance rotation number zone.

Next, an example of the control start rotation number setting control executed by the ECU 708 will be explained referring to the flowchart of FIG. 14.

First, the ECU 708 detects the vibration of the engine 4 based on a result of detection by the vibration sensor 278 (ST701).

Next, the ECU 708 detects the actual resonance rotation number zone at the time based on the vibration of the engine 4 detected at ST701, corrects control start rotation numbers Thneh and Thnel according to the actual resonance rotation number zone (ST702), finishes a control cycle at the time, and goes to a next control cycle. The ECU 708 can set the optimum control start rotation numbers Thneh and Thnel even when the resonance rotation number zone is varied according to a variation of the engine 4 and a variation, a time degradation, and the like of an engine mount system by making the control start rotation numbers Thneh and Thnel variable according to a variation of the engine 4.

According to the vehicle control system 701 according to the embodiment explained above, a vibration generated to the vehicle 2 can be appropriately suppressed. Then, since the ECU 708 changes the control start rotation number based on the magnitude of vibration of the engine 4, the vehicle control system 701 of the embodiment can appropriately execute the engaging force reducing control even when the resonance rotation number zone is varied and can securely suppress a vibration of the vehicle 2.

Note that the vehicle control systems according to the embodiments of the present invention described above can be variously modified within the scope described in claims. The vehicle control system according to each of the embodiments may be configured by combining plural embodiments explained above.

The above explanation is made assuming that the engaging device is the input clutch of the transmission, the present invention is not limited thereto. The engaging device may be a lock-up clutch of a torque converter. Further, although the above explanation is made assuming that the engaging device is operated by the hydraulic pressure of the hydraulic oil, the engaging device may be an electromagnetic engaging device.

The vehicle explained above may be a so-called "hybrid vehicle" provided with a motor generator as an electric motor capable of generating power in addition to the engine 4.

Industrial Applicability

As described above, the vehicle control system according to the present invention is preferably applied to a vehicle control system mounted on various vehicles.

Reference Signs List

1, 201, 301, 401, 501, 601, 701 vehicle control system
2 vehicle
3 drive wheel
4 engine (internal combustion engine)
5 power transmission device
6 brake device
7 state detecting device
8, 208, 308, 408, 508, 608, 708 ECU (control device)
9 torque converter
10a, 10b rotating member
10 input clutch (engaging device)
11 transmission

## Claims

**1.** A vehicle control system (1; 201; 301; 401; 501; 601; 701) comprising:

an internal combustion engine (4) capable of switching an operating state in which a power applied to a drive wheel (3) of a vehicle (2) is generated and a non-operating state in which the generation of the power is stopped, while the vehicle (2) travels;
an engaging device (10) capable of switching a state in which a rotating member (10a) on the internal combustion engine (4) side and a rotating member (10b) on the drive wheel (3) side are engaged with each other so as to be able to transmit a power and a state in which the engagement is released, and capable of adjusting an engaging force for engaging the rotating member (10a) on the internal combustion engine (4) side with the rotating member (10b) on the drive wheel (3) side; and a control device (8; 208; 308; 408; 508; 608; 708)
**characterised in that** the control device is configured to execute engaging force reducing control for reducing the engaging force of the engaging device (10), while the vehicle (2) travels, in comparison with a case that an engine rotation speed of the internal combustion engine (4) is not a resonance rotation speed, when an engine rotation speed of the internal combustion engine (4) is reduced and becomes the resonance rotation speed result from the fact that an operation of the internal combustion engine (4) is stopped.

**2.** The vehicle control system (1; 201; 301; 401; 501; 601; 701) according to claim 1, wherein the resonance rotation speed is set to a speed within a predetermined range.

**3.** The vehicle control system (1; 201; 301; 401; 501; 601; 701) according to claim 1 or 2, wherein in the engaging force reducing control, the control device (8; 208; 308; 408; 508; 608; 708) places the rotating member (10a) on the internal combustion engine (4) side and the rotating member (10b) on the drive wheel (3) side in a slip state or in a released state.

**4.** The vehicle control system (1; 201; 301; 401; 501; 601; 701) according to any one of claims 1, 2 and 3, wherein the control device (8; 208; 308; 408; 508; 608; 708) learns a magnitude of the engaging force in the engaging force reducing control based on a magnitude of vibration of the vehicle (2).

**5.** The vehicle control system (1; 201; 301; 401; 501; 601; 701) according to any one of claims 1, 2, 3 and 4, wherein when an engine rotation speed of the internal combustion engine (4) becomes a control start rotation speed according to the resonance rotation speed, the control device (8; 208; 308; 408; 508; 608; 708) starts the engaging force reducing control and changes the control start rotation speed based on a changing speed of an engine rotation speed of the internal combustion engine (4).

**6.** The vehicle control system (1; 201; 301; 401; 501; 601; 701) according to any one of claims 1, 2, 3 to 5, wherein when an engine rotation speed of the internal combustion engine (4) becomes a control start rotation speed according to the resonance rotation speed, the control device (8; 208; 308; 408; 508; 608; 708) starts the engaging force reducing control and changes the control start rotation speed based on delay characteristics until the engaging force becomes a target magnitude after the engaging force reducing control is started.

**7.** The vehicle control system (1; 201; 301; 401; 501; 601; 701) according to any one of claims 1, 2, 3 to 6, wherein when the control device (8; 208; 308; 408; 508; 608; 708) determines that the vehicle (2) is in an abrupt brake state, the control device (8; 208; 308; 408; 508; 608; 708) starts the engaging force reducing control.

**8.** The vehicle control system (1; 201; 301; 401; 501; 601; 701) according to any one of claims 1, 2, 3 to 7, wherein when a degree of abrupt brake of the vehicle (2) is equal to or more than a preset threshold value, the control device (8; 208; 308; 408; 508; 608; 708) prohibits the engaging force reducing control.

**9.** The vehicle control system (1; 201; 301; 401; 501; 601; 701) according to any one of claims 1, 2, 3 to 8, wherein when an engine rotation speed of the internal combustion engine (4) becomes a control start rotation speed according to the resonance rotation speed, the control device (8; 208; 308; 408; 508; 608; 708) starts the engaging force reducing control and changes the control start rotation speed based on an intake air amount, an intake air temperature, or an intake air density of the internal combustion engine (4).

**10.** The vehicle control system (1; 201; 301; 401; 501; 601; 701) according to any one of claims 1, 2, 3 to 9, wherein when an engine rotation speed of the internal combustion engine (4) becomes a control start rotation speed according to the resonance rotation speed, the control device (8; 208; 308; 408; 508; 608; 708) starts the engaging force reducing control and changes the control start rotation speed based on a magnitude of vibration of the internal combustion engine (4).

**Patentansprüche**

**1.** Fahrzeugsteuerungssystem (1; 201; 301; 401; 501; 601; 701), das aufweist:

eine Brennkraftmaschine (4), die in der Lage ist, einen Betriebszustand, bei dem eine Leistung, die auf ein Antriebsrad (3) eines Fahrzeugs (2) ausgeübt wird, erzeugt wird, und einen Nicht-Betriebszustand, bei dem die Erzeugung der Leistung gestoppt wird, während das Fahrzeug (2) fährt, zu wechseln;
eine Eingriffsvorrichtung (10), die in der Lage ist, einen Zustand, bei dem ein Drehelement (10a) auf der Seite der Brennkraftmaschine (4) und ein Drehelement (10b) auf der Seite des Antriebsrads (3) ineinander eingreifen, um in der Lage zu sein, eine Leistung zu übertragen, und einen Zustand, bei dem der Eingriff gelöst ist, zu wechseln, und in der Lage ist, eine Eingriffskraft zum Eingreifen des Drehelementes (10a) auf der Seite der Brennkraftmaschine (4) in das Drehelement (10b) auf der Seite des Antriebsrads (3) einzustellen; und
eine Steuerungsvorrichtung (8; 208; 308; 408; 508; 608; 708);
**dadurch gekennzeichnet, dass** die Steuerungsvorrichtung ausgelegt ist, eine Eingriffskraftverringerungssteuerung zum Verringern der Eingriffskraft der Eingriffsvorrichtung (10), während das Fahrzeug (2) fährt, im Vergleich zu einem Fall auszuführen, in dem eine Motordrehzahl der Brennkraftmaschine (4) keine Resonanzdrehzahl ist, wenn eine Motordrehzahl der Brennkraftmaschine (4) verringert wird und aufgrund der Tatsache zu der Resonanzdrehzahl wird, dass ein Betrieb der Brennkraftmaschine (4) gestoppt wird.

**2.** Fahrzeugsteuerungssystem (1; 201; 301; 401; 501; 601; 701) nach Anspruch 1, wobei
die Resonanzdrehzahl auf eine Drehzahl innerhalb eines vorbestimmten Bereiches eingestellt ist.

**3.** Fahrzeugsteuerungssystem (1; 201; 301; 401; 501; 601; 701) nach Anspruch 1 oder 2, wobei
die Steuerungsvorrichtung (8; 208; 308; 408; 508; 608; 708) bei der Eingriffskraftverringerungssteuerung das Drehelement (10a) auf der Seite der Brennkraftmaschine (4) und das Drehelement (10b) auf der Seite des Antriebsrads (3) in einen Schlupfzustand oder in einen gelösten Zustand versetzt.

**4.** Fahrzeugsteuerungssystem (1; 201; 301; 401; 501; 601; 701) nach einem der Ansprüche 1, 2 und 3, wobei
die Steuerungsvorrichtung (8; 208; 308; 408; 508; 608; 708) eine Stärke der Eingriffskraft bei der Eingriffskraftverringerungssteuerung auf der Grundlage einer Stärke einer Vibration des Fahrzeugs (2) lernt.

**5.** Fahrzeugsteuerungssystem (1; 201; 301; 401; 501; 601; 701) nach einem der Ansprüche 1, 2, 3 und 4, wobei
wenn eine Motordrehzahl der Brennkraftmaschine (4) gleich einer Steuerungsstartdrehzahl entsprechend der Resonanzdrehzahl wird, die Steuerungsvorrichtung (8; 208; 308; 408; 508; 608; 708) die Eingriffskraftverringerungssteuerung startet und die Steuerungsstartdrehzahl auf der Grundlage einer Änderungsgeschwindigkeit einer Motordrehzahl der Brennkraftmaschine (4) ändert.

6. Fahrzeugsteuerungssystem (1; 201; 301; 401; 501; 601; 701) nach einem der Ansprüche 1, 2, 3 bis 5, wobei wenn eine Motordrehzahl der Brennkraftmaschine (4) gleich einer Steuerungsstartdrehzahl entsprechend der Resonanzdrehzahl wird, die Steuerungsvorrichtung (8; 208; 308; 408; 508; 608; 708) die Eingriffskraftverringerungssteuerung startet und die Steuerungsstartdrehzahl auf der Grundlage von Verzögerungseigenschaften ändert, bis die Eingriffskraft gleich einer Sollstärke wird, nachdem die Eingriffskraftverringerungssteuerung gestartet wurde.

7. Fahrzeugsteuerungssystem (1; 201; 301; 401; 501; 601; 701) nach einem der Ansprüche 1, 2, 3 bis 6, wobei wenn die Steuerungsvorrichtung (8; 208; 308; 408; 508; 608; 708) bestimmt, dass sich das Fahrzeug (2) in einem abrupten Bremszustand befindet, die Steuerungsvorrichtung (8; 208; 308; 408; 508; 608; 708) die Eingriffskraftverringerungssteuerung startet.

8. Fahrzeugsteuerungssystem (1; 201; 301, 401; 501; 601; 701) nach einem der Ansprüche 1, 2, 3 bis 7, wobei wenn ein Grad eines abrupten Bremsens des Fahrzeugs (2) gleich oder größer als ein voreingestellter Schwellenwert ist, die Steuerungsvorrichtung (8; 208; 308; 408; 508; 608; 708) die Eingriffskraftverringerungssteuerung verhindert.

9. Fahrzeugsteuerungssystem (1; 201; 301; 401; 501; 601; 701) nach einem der Ansprüche 1, 2, 3 bis 8, wobei wenn eine Motordrehzahl der Brennkraftmaschine (4) gleich einer Steuerungsstartdrehzahl entsprechend der Resonanzdrehzahl wird, die Steuerungsvorrichtung (8; 208; 308; 408; 508; 608; 708) die Eingriffskraftverringerungssteuerung startet und die Steuerungsstartdrehzahl auf der Grundlage einer Ansaugluftmenge, einer Ansauglufttemperatur oder einer Ansaugluftdichte der Brennkraftmaschine (4) ändert.

10. Fahrzeugsteuerungssystem (1; 201; 301; 401; 501; 601; 701) nach einem der Ansprüche 1, 2, 3 bis 9, wobei wenn eine Motordrehzahl der Brennkraftmaschine (4) gleich einer Steuerungsstartdrehzahl entsprechend der Resonanzdrehzahl wird, die Steuerungsvorrichtung (8; 208; 308; 408; 508; 608; 708) die Eingriffskraftverringerungssteuerung startet und die Steuerungsstartdrehzahl auf der Grundlage einer Stärke einer Vibration der Brennkraftmaschine (4) ändert.

## Revendications

1. Système de commande de véhicule (1 ; 201 ; 301 ; 401 ; 501 ; 601 ; 701) comprenant :

   un moteur à combustion interne (4) pouvant commuter un état de fonctionnement dans lequel une puissance appliquée sur une roue motrice (3) d'un véhicule (2) est générée et un état non opérationnel dans lequel la génération de la puissance est arrêtée, alors que le véhicule (2) se déplace ;
   un dispositif de mise en prise (10) capable de commuter un état dans lequel un élément rotatif (10a) du côté du moteur à combustion interne (4) et un élément rotatif (10b) du côté de la roue motrice (3) sont mis en prise entre eux afin de pouvoir transmettre une puissance et un état dans lequel la mise en prise est libérée, et pouvant ajuster une force de mise en prise pour mettre en prise l'élément rotatif (10a) du côté du moteur à combustion interne (4) avec l'élément rotatif (10b) du côté de la roue motrice (3), et
   un dispositif de commande (8 ; 208 ; 308 ; 408 ; 508 ; 608 ; 708), **caractérisé en ce que** le dispositif de commande est configuré pour exécuter une commande de réduction de force de mise en prise pour réduire la force de mise en prise du dispositif de mise en prise (10), alors que le véhicule (2) se déplace, en comparaison avec un cas dans lequel une vitesse de rotation de moteur du moteur à combustion interne (4) n'est pas une vitesse de rotation à résonance, lorsqu'une vitesse de rotation de moteur du moteur à combustion interne (4) est réduite et devient le résultat de la vitesse de rotation à résonance à partir du fait qu'un fonctionnement du moteur à combustion interne (4) est arrêté.

2. Système de commande de véhicule (1 ; 201 ; 301 ; 401 ; 501 ; 601 ; 701) selon la revendication 1, dans lequel :

   la vitesse de rotation à résonance est déterminée sur une vitesse dans une plage prédéterminée.

3. Système de commande de véhicule (1 ; 201 ; 301 ; 401 ; 501 ; 601 ; 701) selon la revendication 1 ou 2, dans lequel :

   dans la commande de réduction de force de mise en prise, le dispositif de commande (8 ; 208 ; 308 ; 408 ; 508 ; 608 ; 708) place l'élément rotatif (10a) du côté du moteur à combustion interne (4) et l'élément rotatif (10b) du côté de la roue motrice (3) dans un état de glissement ou dans un état libéré.

4. Système de commande de véhicule (1 ; 201 ; 301 ; 401 ; 501 ; 601 ; 701) selon l'une quelconque des revendications 1, 2 ou 3, dans lequel :

   le dispositif de commande (8 ; 208 ; 308 ; 408 ; 508 ; 608 ; 708) apprend une grandeur de la force de mise en prise dans la commande de réduction de force de mise en prise en fonction d'une grandeur de vibration du véhicule (2).

5. Système de commande de véhicule (1 ; 201 ; 301 ; 401 ; 501 ; 601 ; 701) selon l'une quelconque des revendications 1, 2, 3 et 4 dans lequel :

   lorsqu'une vitesse de rotation de moteur d'un moteur à combustion interne (4) devient une vitesse de rotation de début de commande selon la vitesse de rotation à résonance, le dispositif de commande (8 ; 208 ; 308 ; 408 ; 508 ; 608 ; 708) commence la commande de réduction de force de mise en prise et modifie la vitesse de rotation de début de commande en fonction d'une vitesse de changement d'une vitesse de rotation de moteur du moteur à combustion interne (4).

6. Système de commande de véhicule (1 ; 201 ; 301 ; 401 ; 501 ; 601 ; 701) selon l'une quelconque des revendications 1, 2, 3 à 5, dans lequel :

   lorsqu'une vitesse de rotation de moteur du moteur à combustion interne (4) devient une vitesse de rotation de début de commande selon la vitesse de rotation à résonance, le dispositif de commande (8 ; 208 ; 308 ; 408 ; 508 ; 608 ; 708) commence la commande de réduction de force de mise en prise et modifie la vitesse de rotation de début de commande en fonction d'une caractéristique de retard jusqu'à ce que la force de mise en prise devienne une grandeur cible après le commencement de la commande de réduction de force de mise en prise.

7. Système de commande de véhicule (1 ; 201 ; 301 ; 401 ; 501 ; 601 ; 701) selon l'une quelconque des revendications 1, 2, 3 à 6, dans lequel :

   lorsque le dispositif de commande (8, 208, 308, 408, 508, 608, 708) détermine que le véhicule (2) est dans un état de freinage brusque, le dispositif de commande (8 ; 208 ; 308 ; 408 ; 508 ; 608 ; 708) commence la commande de réduction de force de mise en prise.

8. Système de commande de véhicule (1 ; 201 ; 301 ; 401 ; 501 ; 601 ; 701) selon l'une quelconque des revendications 1, 2, 3 à 7, dans lequel :

   lorsqu'un degré de freinage brusque du véhicule (2) est égal ou supérieur à une valeur de seuil prédéterminée, le dispositif de commande (8 ; 208 ; 308 ; 408 ; 508 ; 608 ; 708) empêche la commande de réduction de force de mise en prise.

9. Système de commande de véhicule (1 ; 201 ; 301 ; 401 ; 501 ; 601 ; 701) selon l'une quelconque des revendications 1, 2, 3 à 8, dans lequel :

   lorsqu'une vitesse de rotation de moteur du moteur à combustion interne (4) devient une vitesse de rotation de début de commande selon la vitesse de rotation à résonance, le dispositif de commande (8 ; 208 ; 308 ; 408 ; 508 ; 608 ; 708) commence la commande de réduction de force de mise en prise et modifie la vitesse de rotation de début de commande en fonction d'une quantité d'air d'admission, d'une température d'air d'admission ou d'une densité d'air d'admission du moteur à combustion interne (4).

10. Système de commande de véhicule (1 ; 201 ; 301 ; 401 ; 501 ; 601 ; 701) selon l'une quelconque des revendications 1, 2, 3 à 9, dans lequel :

   lorsqu'une vitesse de rotation de moteur du moteur à combustion interne (4) devient une vitesse de rotation de début de commande selon la vitesse de rotation à résonance, le dispositif de commande (8 ; 208 ; 308 ; 408 ; 508 ; 608 ; 708) commence la commande de réduction de force de mise en prise et modifie la vitesse de rotation de début de commande en fonction d'une grandeur de vibration du moteur à combustion interne (4).

FIG.1

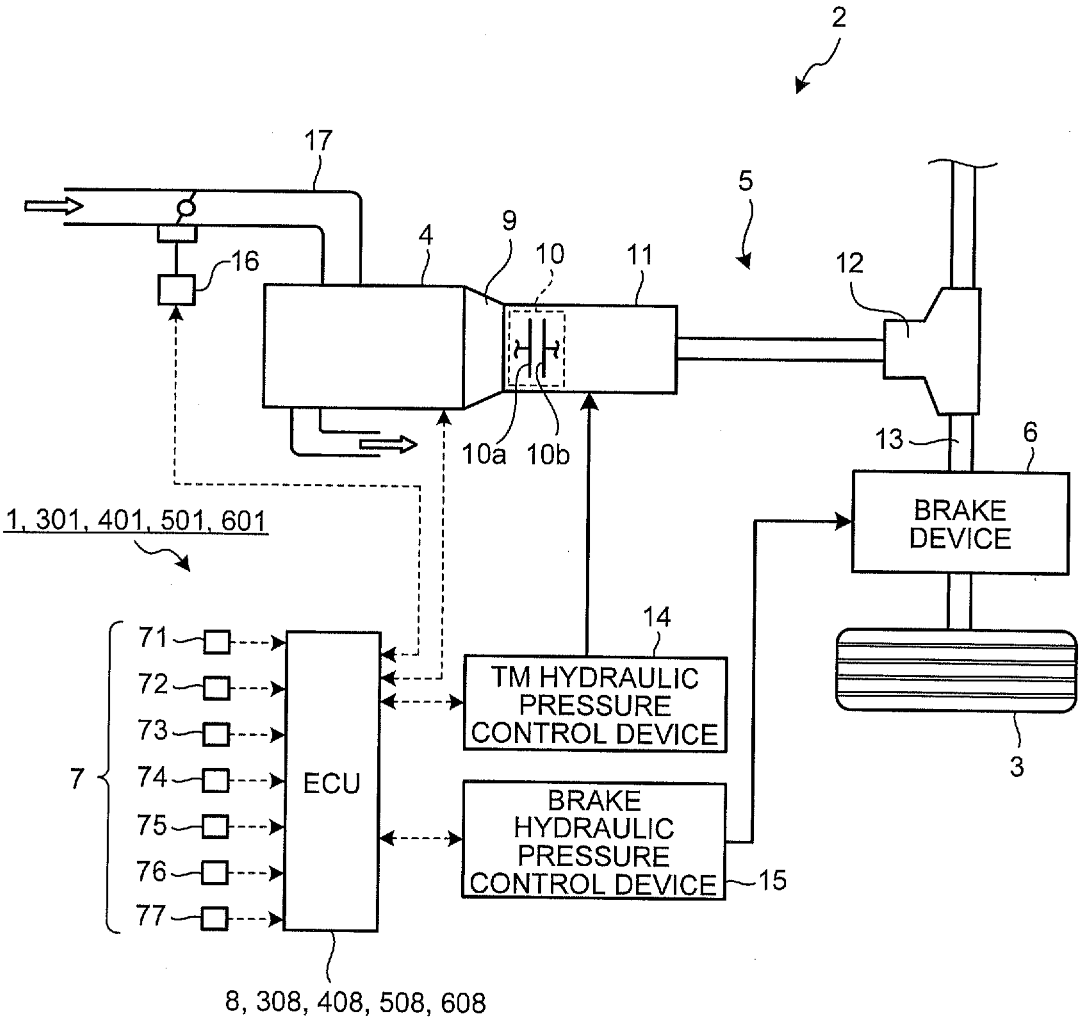
2
17
5
4
9
10
11
12
16
10a
10b
13
6
BRAKE DEVICE
1, 301, 401, 501, 601
14
71
72
73
74
75
76
77
7
ECU
TM HYDRAULIC PRESSURE CONTROL DEVICE
BRAKE HYDRAULIC PRESSURE CONTROL DEVICE
15
3
8, 308, 408, 508, 608

FIG.2

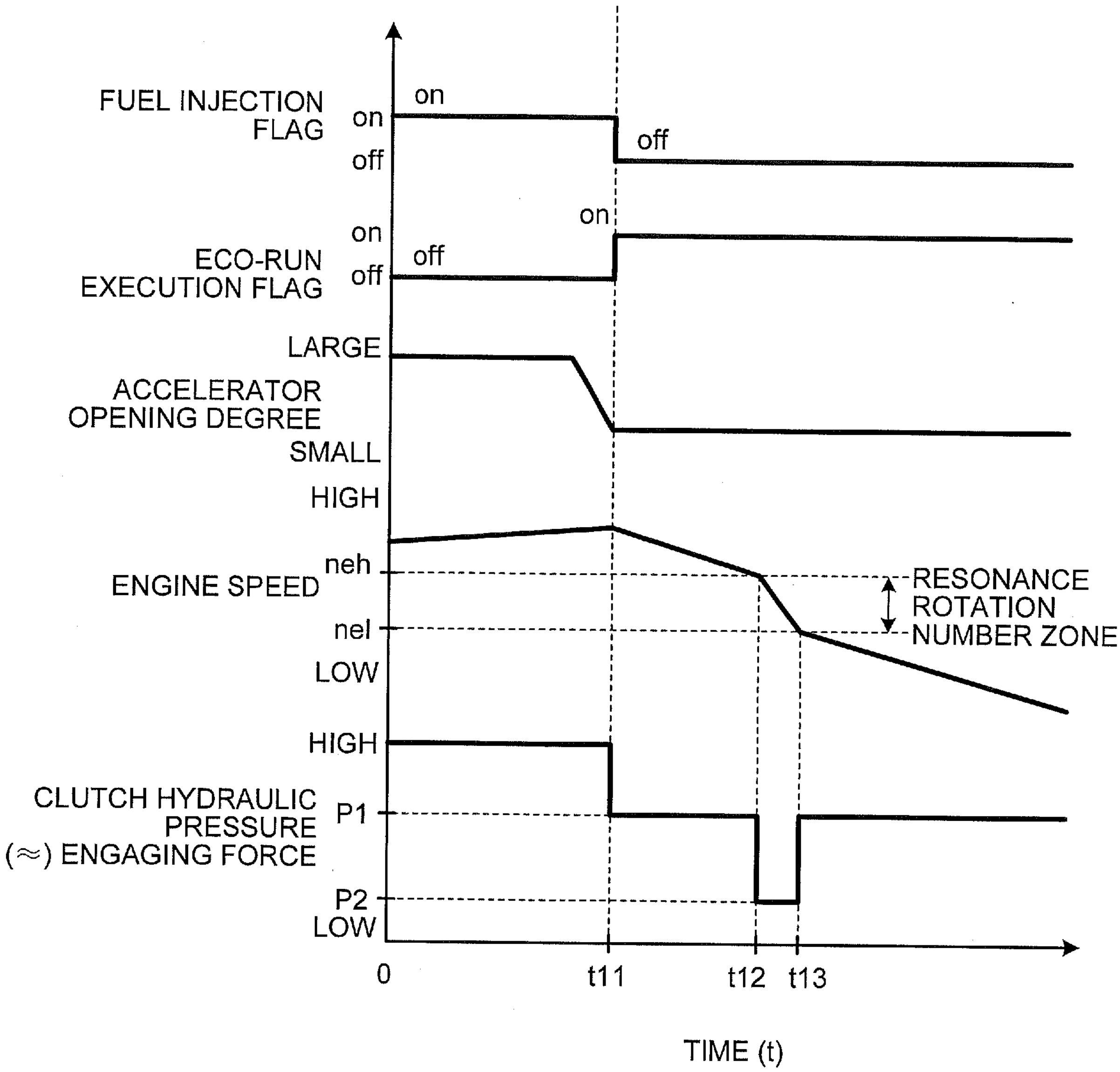
FUEL INJECTION FLAG
on
off
on
off
on
off
on
off
ECO-RUN EXECUTION FLAG
LARGE
ACCELERATOR OPENING DEGREE
SMALL
HIGH
ENGINE SPEED
neh
nel
LOW
RESONANCE ROTATION NUMBER ZONE
HIGH
CLUTCH HYDRAULIC PRESSURE (≈) ENGAGING FORCE
P1
P2
LOW
0
t11
t12
t13
TIME (t)

FIG.3

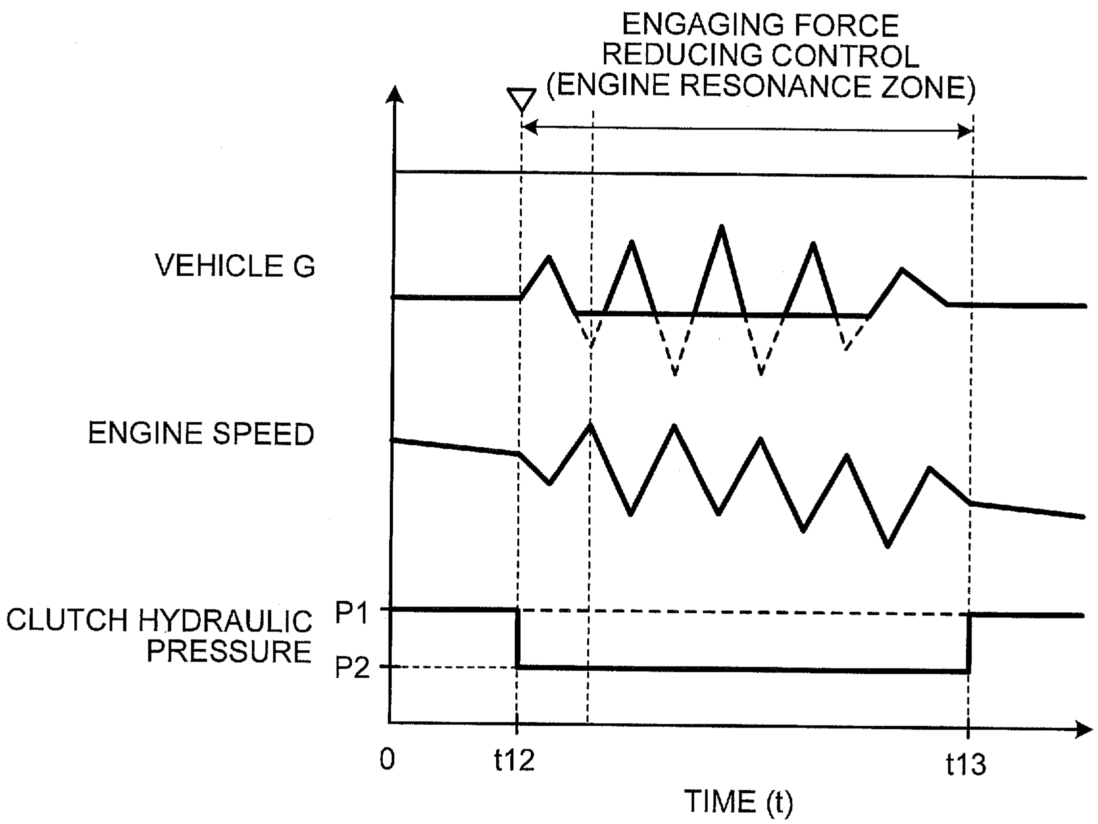
ENGAGING FORCE
REDUCING CONTROL
(ENGINE RESONANCE ZONE)
VEHICLE G
ENGINE SPEED
CLUTCH HYDRAULIC
PRESSURE
P1
P2
0
t12
t13
TIME (t)

FIG.4

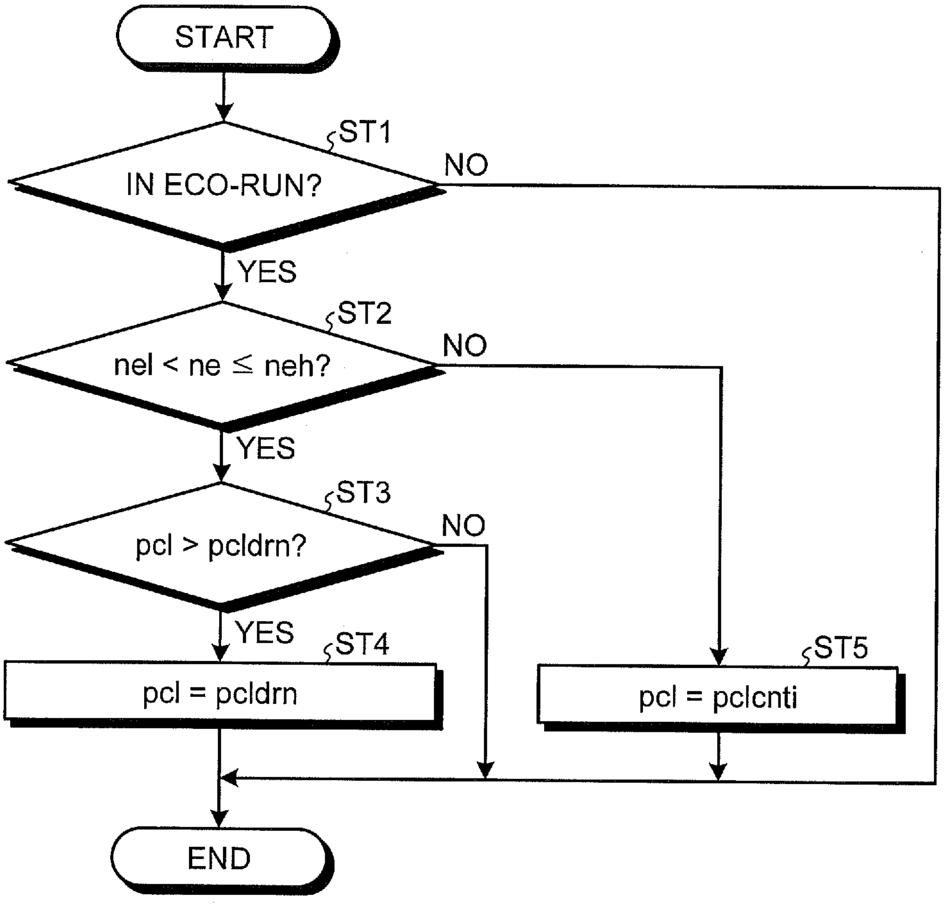
START
ST1
IN ECO-RUN?
NO
YES
ST2
nel < ne ≤ neh?
NO
YES
ST3
pcl > pcldrn?
NO
YES
ST4
pcl = pcldrn
ST5
pcl = pclcnti
END

FIG.5

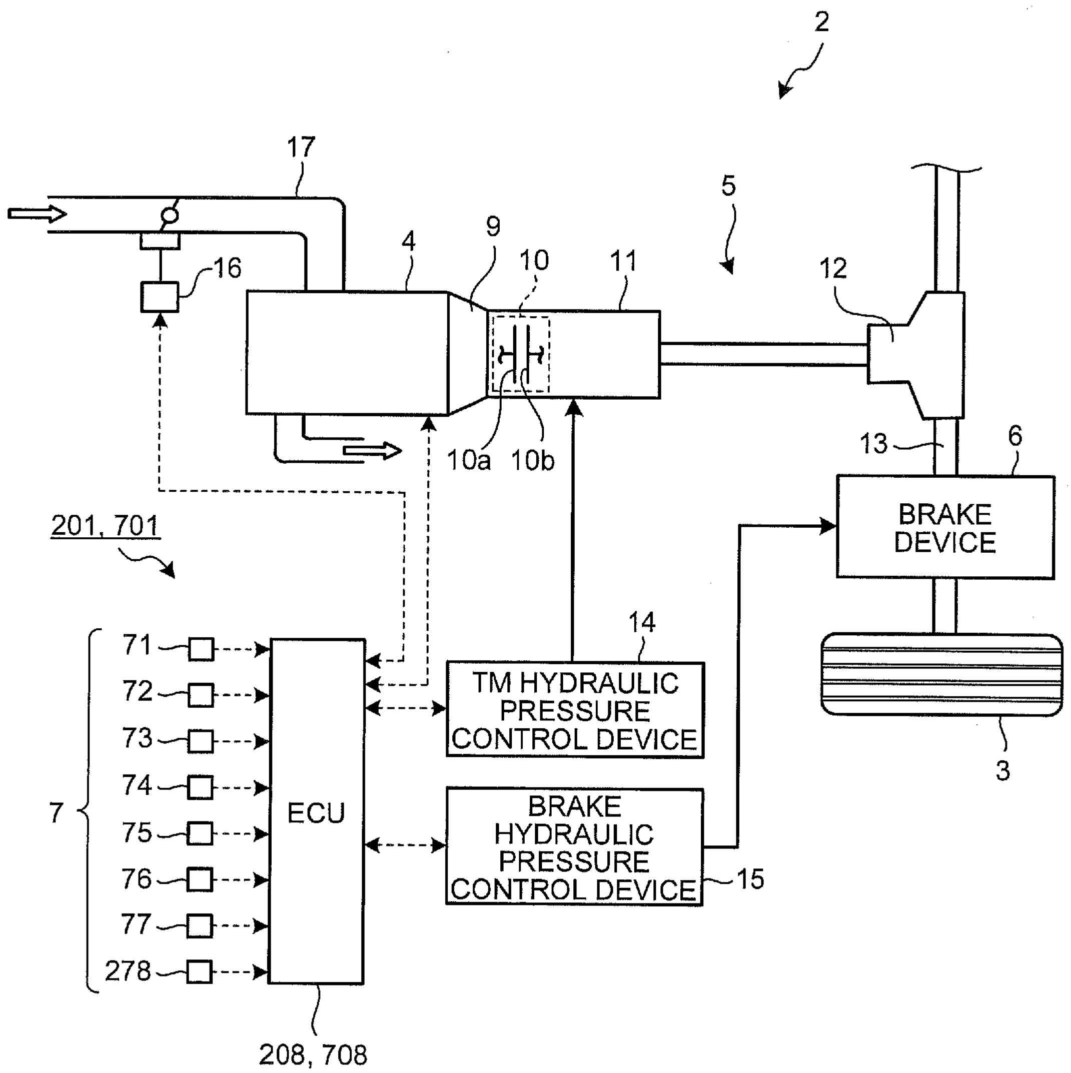
2
17
5
4
9
10
11
12
16
10a
10b
13
6
BRAKE DEVICE
201, 701
14
71
72
73
74
75
76
77
278
7
ECU
TM HYDRAULIC PRESSURE CONTROL DEVICE
BRAKE HYDRAULIC PRESSURE CONTROL DEVICE
15
3
208, 708

FIG.6

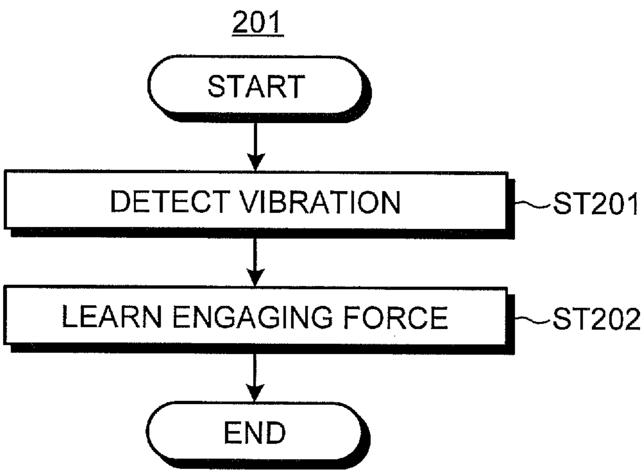
201
START
DETECT VIBRATION
ST201
LEARN ENGAGING FORCE
ST202
END

FIG.7

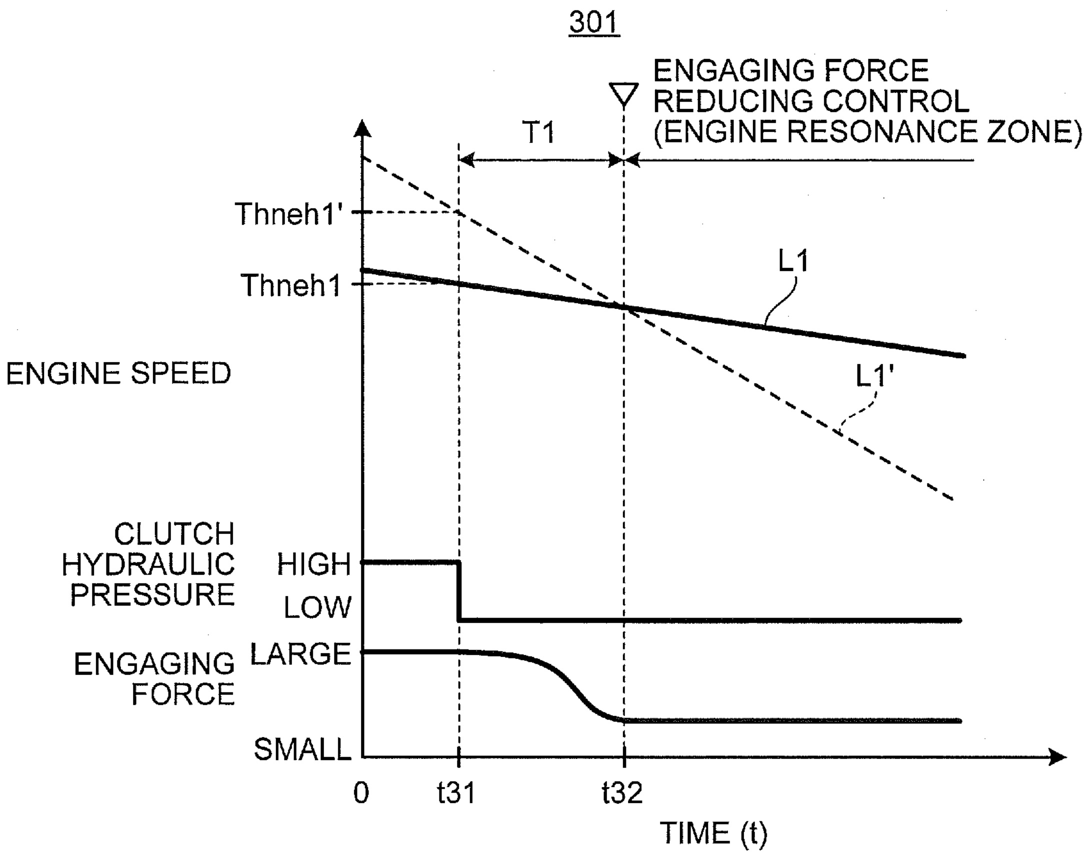
301
ENGAGING FORCE
REDUCING CONTROL
(ENGINE RESONANCE ZONE)
T1
Thneh1'
Thneh1
L1
L1'
ENGINE SPEED
CLUTCH
HYDRAULIC
PRESSURE
HIGH
LOW
ENGAGING
FORCE
LARGE
SMALL
0
t31
t32
TIME (t)

FIG.8

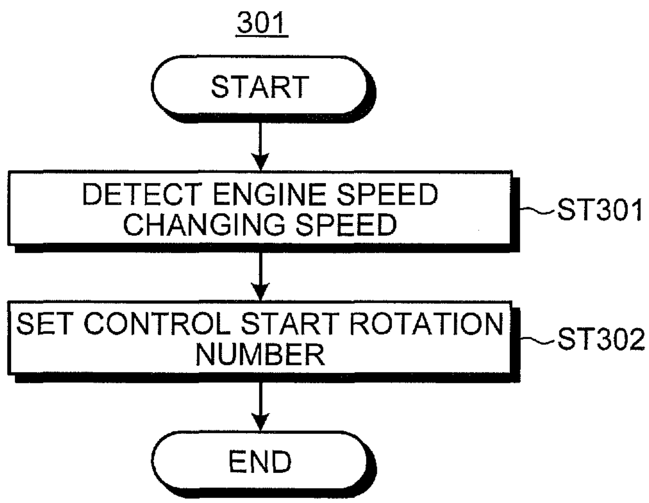
301
START
DETECT ENGINE SPEED CHANGING SPEED
ST301
SET CONTROL START ROTATION NUMBER
ST302
END

FIG.9

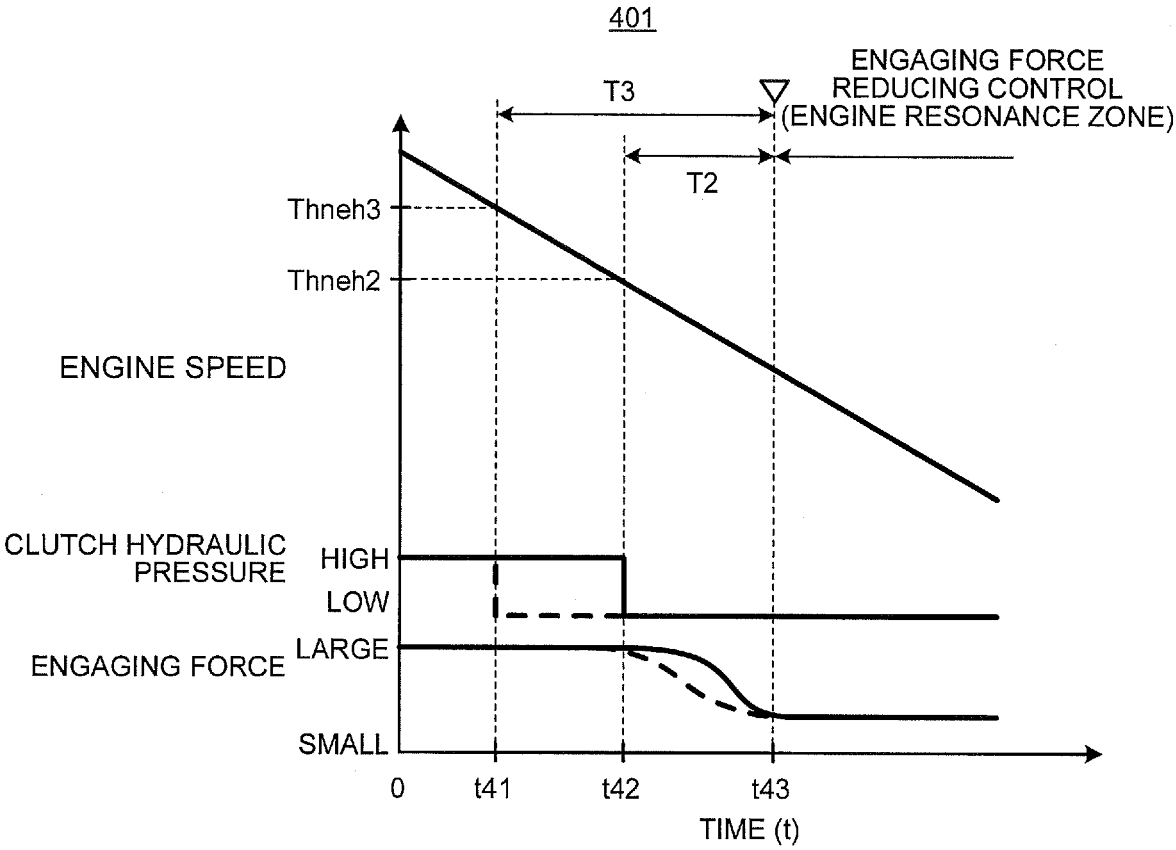
401
ENGAGING FORCE
REDUCING CONTROL
(ENGINE RESONANCE ZONE)
T3
T2
Thneh3
Thneh2
ENGINE SPEED
CLUTCH HYDRAULIC
PRESSURE
HIGH
LOW
ENGAGING FORCE
LARGE
SMALL
0
t41
t42
t43
TIME (t)

FIG.10

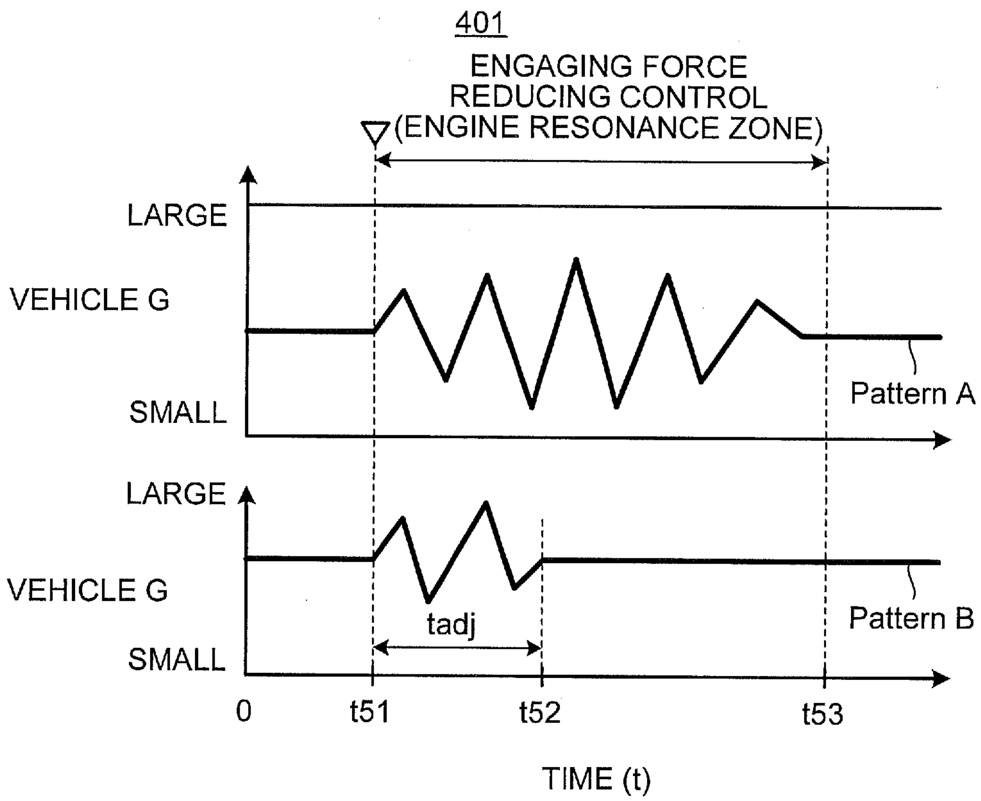
401
ENGAGING FORCE
REDUCING CONTROL
(ENGINE RESONANCE ZONE)
LARGE
VEHICLE G
SMALL
Pattern A
LARGE
VEHICLE G
SMALL
tadj
Pattern B
0
t51
t52
t53
TIME (t)

FIG.11

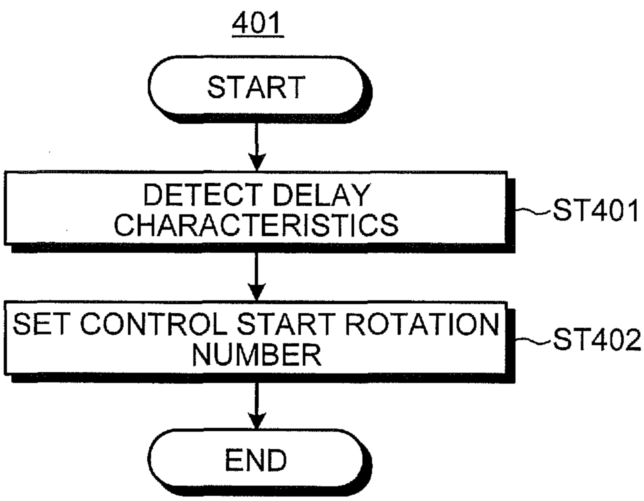
401
START
DETECT DELAY CHARACTERISTICS
ST401
SET CONTROL START ROTATION NUMBER
ST402
END

FIG.12

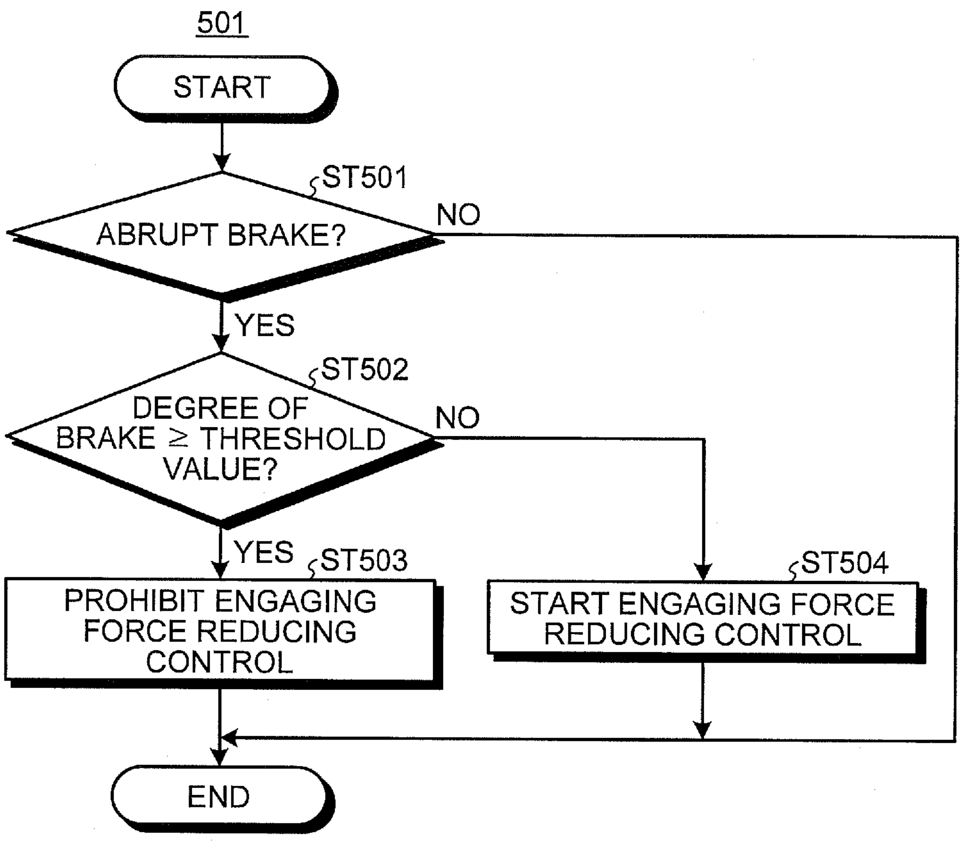
501
START
ST501
ABRUPT BRAKE?
NO
YES
ST502
DEGREE OF BRAKE ≥ THRESHOLD VALUE?
NO
YES
ST503
PROHIBIT ENGAGING FORCE REDUCING CONTROL
ST504
START ENGAGING FORCE REDUCING CONTROL
END

FIG.13

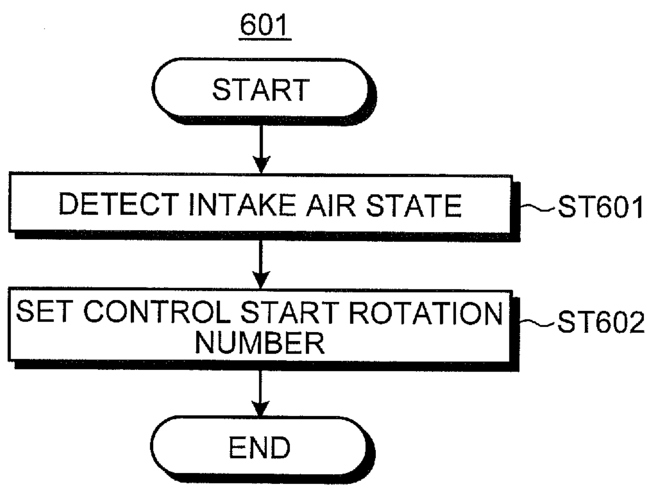
601
START
DETECT INTAKE AIR STATE
ST601
SET CONTROL START ROTATION NUMBER
ST602
END

FIG.14

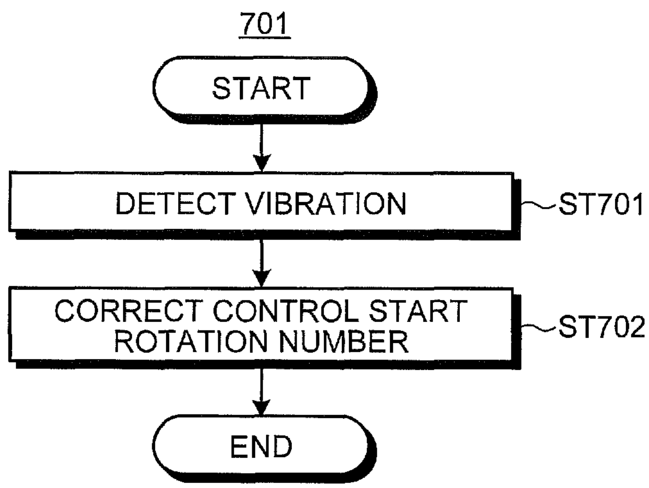
701
START
DETECT VIBRATION
ST701
CORRECT CONTROL START ROTATION NUMBER
ST702
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102008009135
- JP 2006046541 A